(19) Europäisches Patentamt
European Patent Office
Office européen des brevets

(11) **EP 1 144 537 B1**

(12) # EUROPÄISCHE PATENTSCHRIFT

(45) Veröffentlichungstag und Bekanntmachung des Hinweises auf die Patenterteilung:
**17.03.2004 Patentblatt 2004/12**

(21) Anmeldenummer: **99965539.2**

(22) Anmeldetag: **22.12.1999**

(51) Int Cl.$^7$: **C09K 3/18**

(86) Internationale Anmeldenummer:
**PCT/EP1999/010322**

(87) Internationale Veröffentlichungsnummer:
**WO 2000/039240 (06.07.2000 Gazette 2000/27)**

(54) **ULTRAPHOBE OBERFLÄCHE**

ULTRAPHOBIC SURFACE

SURFACE ULTRAPHOBE

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **24.12.1998 DE 19860136**
**24.12.1998 DE 19860134**
**24.12.1998 DE 19860141**

(43) Veröffentlichungstag der Anmeldung:
**17.10.2001 Patentblatt 2001/42**

(73) Patentinhaber: **Sunyx Surface Nanotechnologies GmbH**
**50933 Köln (DE)**

(72) Erfinder:
- **REIHS, Karsten**
**D-50679 Köln (DE)**
- **DUFF, Daniel-Gordon**
**D-51373 Leverkusen (DE)**
- **WIESSMEIER, Georg**
**D-51061 Köln (DE)**
- **VOETZ, Matthias**
**D-50823 Köln (DE)**
- **KIJLSTRA, Johan**
**D-51375 Leverkusen (DE)**
- **RÜHLE, Dieter**
**D-51519 Odenthal (DE)**
- **KÖHLER, Burkhard**
**D-51373 Leverkusen (DE)**

(74) Vertreter: **Kutzenberger, Helga, Dr.**
**Kutzenberger & Wolff,**
**Theodor-Heuss-Ring 23**
**50668 Köln (DE)**

(56) Entgegenhaltungen:
**EP-A- 0 476 510**
**EP-A- 0 754 738**
**EP-A- 0 795 592**
**EP-A- 0 825 241**
**WO-A-96/04123**
**US-A- 5 277 788**
**US-A- 5 693 236**

- **PATENT ABSTRACTS OF JAPAN vol. 1998, no. 12, 31. Oktober 1998 (1998-10-31) -& JP 10 195348 A (KANSAI PAINT CO LTD), 28. Juli 1998 (1998-07-28)**
- **RUPPE C ET AL: "Roughness analysis of optical films and substrates by atomic force microscopy" THIN SOLID FILMS,CH,ELSEVIER-SEQUOIA S.A. LAUSANNE, Bd. 288, Nr. 1, 15. November 1996 (1996-11-15), Seiten 8-13, XP004049513 ISSN: 0040-6090**
- **CHEMICAL ABSTRACTS, vol. 115, no. 9, 2. September 1991 (1991-09-02) Columbus, Ohio, US; abstract no. 88721, PRIME, KEVIN L. ET AL: "Self-assembled organic monolayers: model systems for studying adsorption of proteins at surfaces" XP002138454 & SCIENCE (WASHINGTON, D. C., 1883-) (1991), 252(5009), 1164-7 ,1991,**
- **D.W.HATCHETT ET AL: "ELECTROCHEMICAL MEASUREMENT OF THE FREE ENERGY OF ABSORPTION OF N-ALKANETHIOLATES AT AG(111)" JOURNAL OF THE AMERICAN CHEMICAL SOCIETY., Bd. 120, 11. Februar 1998 (1998-02-11), Seiten 1062-1069, XP002138453 AMERICAN CHEMICAL SOCIETY, WASHINGTON, DC., US ISSN: 0002-7863**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Bemerkungen:

Die Akte enthält technische Angaben, die nach dem Eingang der Anmeldung eingereicht wurden und die nicht in dieser Patentschrift enthalten sind.

**Beschreibung**

Die vorliegende Erfindung betrifft eine ultraphobe Oberfläche, Verfahren zu ihrer Herstellung und ihre Verwendung. Die Oberfläche weist eine Oberflächentopographie auf, bei der die Ortsfrequenzen f der einzelnen Fourierkomponenten und deren Amplituden a(f) ausgedrückt durch das Integral der Funktion S

$$S(\log f) = a(f) \cdot f \qquad (1)$$

errechnet zwischen den Integrationsgrenzen $\log (f_1 / \mu m^{-1}) = -3$ und $\log (f_2 / \mu m^{-1}) = 3$, mindestens 0,5 beträgt und besteht aus einem hydrophoben oder insbesondere oleophoben Material oder ist mit einem hydrophoben oder insbesondere oleophoben Material beschichtet.

Ultraphobe Oberflächen zeichnen sich dadurch aus, daß der Kontaktwinkel eines Tropfens einer Flüssigkeit, in der Regel Wasser, der auf der Oberfläche liegt, deutlich mehr als 90° beträgt und daß der Abrollwinkel 10° nicht überschreitet. Ultraphobe Oberflächen mit einem Randwinkel > 150° und dem o.g. Abrollwinkel haben einen sehr hohen technischen Nutzen, weil sie z.B. mit Wasser aber auch mit Öl nicht benetzbar sind, Schmutzpartikel an diesen Oberflächen nur sehr schlecht anhaften und diese Oberflächen selbstreinigend sind. Unter Selbstreinigung wird hier die Fähigkeit der Oberfläche verstanden, der Oberfläche anhaftende Schmutz- oder Staubpartikel leicht an Flüssigkeiten abzugeben, die die Oberfläche überströmen.

Es hat deshalb nicht an Versuchen gefehlt, solche ultraphoben Oberflächen zur Verfügung zu stellen. So wird in der EP 476 510 A1 ein Verfahren zur Herstellung einer ultraphoben Oberfläche offenbart, bei dem ein Metalloxidfilm auf eine Glasfläche aufgebracht und dann unter Verwendung eines Ar-Plasmas geätzt wird. Die mit diesem Verfahren hergestellten Oberflächen haben jedoch den Nachteil, daß der Kontaktwinkel eines Tropfens, der auf der Oberfläche liegt, weniger als 150° beträgt.

Auch in der US 5 693 236 werden mehrere Verfahren zur Herstellung von ultraphoben Oberflächen gelehrt, bei denen Zinkoxid Mikronadeln mit einem Bindemittel auf eine Oberfläche gebracht werden und anschließend auf unterschiedliche Art (z.B. durch Plasmabehandlung) teilweise freigelegt werden. Die so strukturierte Oberfläche wird anschließend mit einem wasserabweisenden Mittel beschichtet. Auf diese Weise strukturierte Oberflächen weisen jedoch ebenfalls nur Kontaktwinkel bis 150° auf.

Aus der WO 96/04123 sind ebenfalls Verfahren zur Herstellung von ultraphoben Oberflächen bekannt. In dieser Patentanmeldung wird unter anderem gelehrt, die gewünschten Oberflächenstrukturen bereits bei der Herstellung eines Formkörpers aus hydrophoben Polymeren zu schaffen, in dem die Formkörper von vornherein in Formen hergestellt werden, deren Oberfläche das Negativ der gewünschten Oberflächenstruktur aufweist. Diese Vorgehensweise hat jedoch den Nachteil, dass erst das Negativ der gewünschten Oberflächenstruktur hergestellt werden muss, bevor ein Gegenstand mit der gewünschten Oberflächenstruktur abgeformt werden kann. Beim Herstellen der Negativform wie oben beschrieben, können außerdem Fehler in der Oberfläche auftreten, die den positiven Abdruck aus hydrophobem Polymer hinsichtlich seiner Oberflächeneigenschaften beeinträchtigen.

Es stellt sich deshalb die Aufgabe, ultraphobe Oberflächen und Verfahren zu ihrer Herstellung zur Verfügung zu stellen, die einen Kontaktwinkel ≥ 150°, sowie bevorzugt einen Abrollwinkel ≤ 10° aufweisen.

Als Abrollwinkel wird hier der Neigungswinkel einer grundsätzlich planaren aber strukturierten Oberfläche gegen die Horizontale verstanden, bei dem ein stehender Wassertropfen des Volumens 10µl aufgrund der Schwerkraft bewegt wird, wenn die Oberfläche geneigt wird.

Ein besonderes Problem ist, daß sich die ultraphobe Eigenschaft an Oberflächen von unterschiedlichstem Material mit durchweg verschiedener Oberflächenstruktur zeigt, wie aus den oben genannten Beispielen ersichtlich ist. Es fehlt bislang ein Verfahren, das in der Lage ist, die ultraphobe Eigenschaft einer Oberfläche materialunabhängig zu bestimmen. Weitere Aufgabe der Erfindung ist es daher ein Verfahren zu finden, mit dem sich materialunabhängig Oberflächen auf die ultraphobe Eigenschaft prüfen lassen.

Die Aufgabe wird erfindungsgemäß durch eine strukturierte Oberfläche mit ultraphoben Eigenschaften gelöst, die dadurch gekennzeichnet ist, daß sie eine Oberflächentopographie aufweist, bei der der Wert des Integrals einer Funktion S

$$S(\log f) = a(f) \cdot f \qquad (1),$$

die einen Zusammenhang zwischen den Ortsfrequenzen f der einzelnen Fourierkomponenten und deren Amplituden a(f) gibt, zwischen den Integrationsgrenzen $\log (f_1 / \mu m^{-1}) = -3$ und $\log (f_2 / \mu m^{-1}) = 3$, mindestens 0,5 beträgt und aus einem hydrophoben oder insbesondere oleophoben Material besteht oder mit einem hydrophoben oder insbesondere oleophoben Material beschichtet ist.

Ein hydrophobes Material im Sinne der Erfindung ist ein Material, das auf einer ebenen nicht strukturierten Oberfläche einen Randwinkel bezogen auf Wasser von größer als 90° zeigt.

Ein oleophobes Material im Sinne der Erfindung ist ein Material, das auf einer ebenen nicht strukturierten Oberfläche einen Randwinkel bezogen auf langkettige n-Alkane, wie n-Dekan von größer als 90° zeigt.

Vorzugsweise beträgt das genannte Integral der Funktion (1) > 0,6.

Bevorzugt ist eine ultraphobe Oberfläche, die einen Kontaktwinkel gegenüber Wasser von mindestens 150° , insbesondere von mindestens 155°, aufweist.

Die ultraphobe Oberfläche oder ihr Substrat besteht bevorzugt aus Metall, Kunststoff, Glas oder keramischem Material.

Besonders bevorzugt ist das Metall aus der Reihe Beryllium, Magnesium, Scandium, Titan, Vanadium, Chrom, Mangan, Eisen, Kobalt, Nickel, Kupfer, Zink, Gallium, Yttrium, Zirkonium, Niob, Molybdän, Technetium, Ruthenium, Rhenium, Palladium, Silber, Cadmium, Indium, Zinn, Lanthan, Cer, Praseodym, Neodym, Samarium, Europium, Gadolinium, Terbium, Dysprosium, Holmium, Erbium, Thulium, Ytterbium, Lutetium, Hafnium, Tantal, Wolfram, Rhenium, Osmium, Iridium, Platin, Gold, Thallium, Blei, Wismut, insbesondere Titan, Aluminium, Magnesium, Nickel oder einer Legierung der genannten Metalle ausgewählt.

Ganz besonders bevorzugt ist das Metall der ultraphoben Oberfläche eine Aluminium-Magnesium Legierung, insbesondere bevorzugt $AlMg_3$.

Der für die ultraphobe Oberfläche oder ihr Substrat geeignete Kunststoff ist ein duroplastischer oder thermoplastischer Kunststoff.

Der duroplastische Kunststoff ist insbesondere aus der Reihe: Diallylphthalat-Harz, Epoxid-Harz, Harnstoff-Formaldehyd-Harz, Melamin-Formaldehyd-Harz, Melamin-Phenol-Formaldehyd-Harz, Phenol-Formaldehyd-Harz, Polyimid, Silikonkautschuk und ungesättigtes Polyesterharz ausgewählt.

Der thermoplastische Kunststoff ist insbesondere aus der Reihe: thermoplastisches Polyolefin, z. B. Polypropylen oder Polyethylen, Polycarbonat, Polyestercarbonat, Polyester (z.B. PBT oder PET), Polystyrol, Styrolcopolymerisat, SAN-Harz, kautschukhaltiges Styrol-Pfropf-Copolymerisat, z.B. ABS-Polymerisat, Polyamid, Polyurethan, Polyphenylensulfid, Polyvinylchlorid oder beliebigen möglichen Mischungen der genannten Polymere ausgewählt.

Insbesondere eignen sich folgende thermoplastischen Polymere als Substrat für die erfindungsgemäße Oberfläche:

Polyolefine wie Polyethylen hoher und niedriger Dichte, d. h. Dichten von 0,91 $g/cm^3$ bis 0,97 $g/cm^3$, die nach bekannten Verfahren, Ullmann (4.) 19, Seite 167 ff, Winnacker-Küchler (4.) 6, 353 bis 367, Elias u. Vohwinkel, Neue Polymere Werkstoffe für die industrielle Anwendung, München, Hanser 1983, hergestellt werden können:

Weiterhin eignen sich Polypropylene mit Molekulargewichten von 10.000 g/mol bis 1.000.000 g/mol, die nach bekannten Verfahren, Ullmann (5.) A10, Seite 615 ff., Houben-Weyl E20/2, Seite 722 ff., Ullmann (4.) 19, Seite 195 ff., Kirk-Othmer (3.) 16, Seite 357 ff., hergestellt werden können.

Es sind aber auch Copolymerisate der genannten Olefine oder mit weiteren $\alpha$-Olefinen möglich, wie beispielsweise Polymere aus Ethylen mit Buten, Hexen und/oder Octen, EVA (Ethylenvinylacetatcopolymerisate), EBA (Ethylenethylacrylatcopolymerisate), EEA (Ethylenbutylacrylatcopolymerisate), EAS (Acrylsäureethylencopolymerisate), EVK (Ethylenvinylcarbazolcopolymerisate), EPB (Ethylen-Proylen-Blockcopolymere), EPDM (Ethylen-Propylen-Dien-Copolymerisate), PB (Polybutylene), PMP (Polymethylpentene), PIB (Polyisobutylene), NBR (Acrylnitrilbutadiencopolymerisate), Polyisoprene, Methyl-butylencopolymerisate, Isoprenisobutylencopolymerisate.

Herstellungsverfahren: solche Polymerisate sind z. B. in

Kunststoff-Handbuch, Band IV, München, Hanser Verlag,
Ullmann (4.) 19, Seite 167 ff,
Winnacker-Küchler (4.) 6, 353 bis 367,
Elias u. Vohwinkel, Neue Polymere Werkstoffe, München, Hanser 1983,
Franck u. Biederbick, Kunststoff Kompendium Würzburg, Vogel 1984,

offenbart.

Erfindungsgemäß geeignete thermoplastische Kunststoffe sind auch thermoplastische, aromatische Polycarbonate insbesondere solche auf Basis der Diphenole der Formel (I)

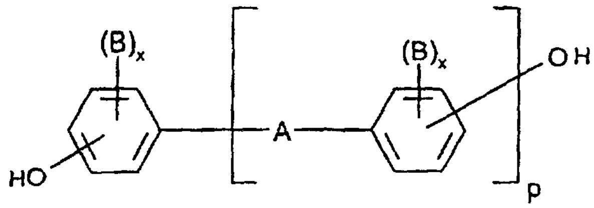

(I)

worin

A eine Einfachbindung, $C_1$-$C_5$-Alkylen, $C_2$-$C_5$-Alkyliden, $C_5$-$C_6$-Cycloalkyliden, -S-, $-SO_2-$, -O-, -CO-, oder ein $C_6$-$C_{12}$-Arylen-Rest, der gegebenenfalls mit weiteren, Heteroatome enthaltenden aromatischen Ringen kondensiert sein kann,

die Reste B, unabhängig voneinander, jeweils ein $C_1$-$C_8$-Alkyl, $C_6$-$C_{10}$-Aryl, besonders bevorzugt Phenyl, $C_7$-$C_{12}$-Aralkyl, bevorzugt Benzyl, Halogen, bevorzugt Chlor, Brom,

x unabhängig voneinander, jeweils 0, 1 oder 2 und

p 1 oder 0 bedeuten,

oder alkylsubstituierte Dihydroxyphenylcycloalkane der Formel (II),

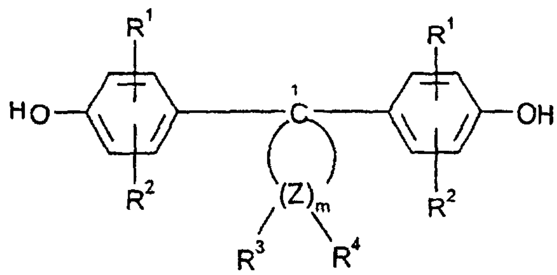

(II)

worin

$R^1$ und $R^2$, unabhängig voneinander, jeweils Wasserstoff, Halogen, bevorzugt Chlor oder Brom, $C_1$-$C_8$-Alkyl, $C_5$-$C_6$-Cycloalkyl, $C_6$-$C_{10}$-Aryl, bevorzugt Phenyl, und $C_7$-$C_{12}$-Aralkyl, bevorzugt Phenyl-$C_1$-$C_4$-Alkyl, insbesondere Benzyl,

m eine ganze Zahl von 4 bis 7, bevorzugt 4 oder 5,

$R^3$ und $R^4$ für jedes Z individuell wählbar, unabhängig voneinander, Wasserstoff oder $C_1$-$C_6$-Alkyl, vorzugsweise Wasserstoff, Methyl oder Ethyl,

und

Z Kohlenstoff bedeutet, mit der Maßgabe, daß an mindestens einem Atom Z $R^3$ und $R^4$ gleichzeitig Alkyl bedeuten.

Geeignete Diphenole der Formel (I) sind z.B. Hydrochinon, Resorcin, 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan, 2,2-Bis-(3-chlor-4-hydroxyphenyl)-propan, 2,2-Bis-(3,5-dibrom-4-hydroxyphenyl)-propan.

Bevorzugte Diphenole der Formel (I) sind 2,2-Bis-(4-hydroxyphenyl)-propan, 2,2-Bis-(3,5-dichlor-4-hydroxyphenyl)-propan und 1,1-Bis-(4-hydroxyphenyl)-cyclohexan.

Bevorzugte Diphenole der Formel (II) sind Dihydroxydiphenylcycloalkane mit 5 und 6 Ring-C-Atomen im cycloaliphatischen Rest [(m = 4 oder 5 in Formel (II)] wie beispielsweise die Diphenole der Formeln

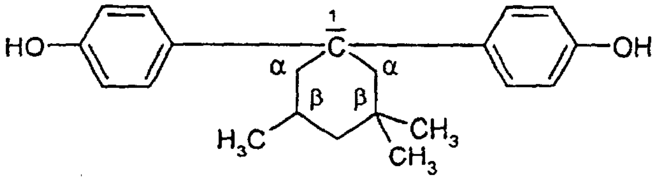

(IIa)

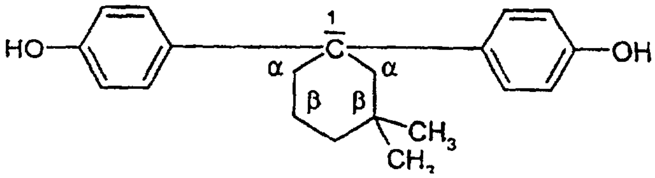

(IIb)

und

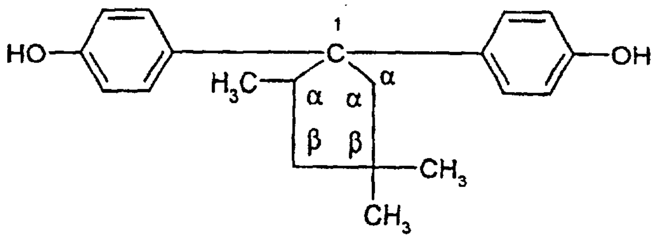

(IIc),

wobei das 1,1-Bis-(4-hydroxyphenyl)-3,3,5-trimethylcyclohexyn (Formel IIc) besonders bevorzugt ist.

Die erfindungsgemäß geeigneten Polycarbonate können in bekannter Weise verzweigt sein, und zwar vorzugsweise durch den Einbau von 0,05 bis 2,0 mol-%, bezogen auf die Summe der eingesetzten Diphenole, an drei- oder mehr als dreifunktionellen Verbindungen, z.B. solchen mit drei oder mehr als drei phenolischen Gruppen, beispielsweise

Phloroglucin,
4,6-Dimethyl-2,4,6-tri-(4-hydroxyphenyl)-hepten-2,
4,6-Dimethyl-2,4,6-tri-(4-hydroxyphenyl)-heptan,
1,3,5-Tri-(4-hydroxyphenyl)-benzol,
1,1,1-Tri-(4-hydroxyphenyl)-ethan,
Tri-(4-hydroxyphenyl)-phenylmethan,
2,2-Bis-(4,4-bis-(4-hydroxyphenyl)-cyclohexyl)-propan,
2,4-Bis-(4-hydroxyphenyl)-isopropyl)-phenol,
2,6-Bis-(2-hydroxy-5'-methyl-benzyl)-4-methylphenol,
2-(4-Hydroxyphenyl)-2-(2,4-dihydroxyphenyl)-propan,
Hexa-(4-(4-hydroxyphenyl-isopropyl)-phenyl)-ortho-terephthalsäureester,
Tetra-(4-hydroxyphenyl)-methan,
Tetra-(4-(4-hydroxyphenyl-isopropyl)-phenoxy)-methan und
1,4-Bis-((4'-,4"-dihydroxytriphenyl)-methyl)-benzol.

Einige der sonstigen dreifunktionellen Verbindungen sind 2,4-Dihydroxybenzoesäure, Trimesinsäure, Trimellitsäure, Cyanurchlorid und 3,3-Bis-(3-methyl-4-hydroxyphenyl)-2-oxo-2,3-dihydroindol.

Bevorzugte Polycarbonate sind neben dem Bisphenol-A-Homopolycarbonat die Copolycarbonate von Bisphenol A mit bis zu 15 mol-%, bezogen auf die mol-Summen an Diphenolen, an 2,2-Bis-(3,5-dibrom-4-hydroxyphenyl)-propan.

Die zum Einsatz kommenden aromatischen Polycarbonate können teilweise durch aromatische Polyestercarbonate ausgetauscht werden.

Aromatische Polycarbonate und/oder aromatische Polyestercarbonate sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-OS 2 232 877, DE-OS 2 703 376, DE-OS 2 714 544, DE-OS 3 000 610, DE-OS 3 832 396; zur Herstellung aromatischer Polyestercarbonate z.B. DE-OS 3 077 934).

Die Herstellung aromatischer Polycarbonate und/oder aromatischer Polyestercarbonate kann z.B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung der Kettenabbrecher und gegebenenfalls unter Verwendung der trifunktionellen oder mehr als trifunktionellen Verzweiger erfolgen.

Weiterhin sind als thermoplastische Kunststoffe Styrol-Copolymerisate von einem oder wenigstens zwei ethylenisch ungesättigten Monomeren (Vinylmonomeren) geeignet, wie beispielsweise von Styrol, α-Methylstyrol, kemsubstituierten Styrolen, Acrylnitril, Methacrylnitril, Methylmethacrylat, Maleinsäureanhydrid, N-substituierte Maleinimide und (Meth)-Acrylsäureester mit 1 bis 18 C-Atomen in der Alkoholkomponente.

Die Copolymerisate sind harzartig, thermoplastisch und kautschukfrei.

Bevorzugte Styrol-Copolymerisate sind solche aus wenigstens einem Monomeren aus der Reihe Styrol, α-Methylstyrol und/oder kemsubstituiertem Styrol mit wenigstens einem Monomeren aus der Reihe Acrylnitril, Methacrylnitril, Methylmethacrylat, Maleinsäureanhydrid und/oder N-substituiertem-Maleinimid.

Besonders bevorzugte Gewichtsverhältnisse im thermoplastischen Copolymerisat sind 60 bis 95 Gew.-% der Styrolmonomeren und 40 bis 5 Gew.-% der weiteren Vinylmonomeren.

Besonders bevorzugte Copolymerisate sind solche aus Styrol mit Acrylnitril und gegebenenfalls mit Methylmethacrylat, aus α-Methylstyrol mit Acrylnitril und gegebenenfalls mit Methylmethacrylat, oder aus Styrol und α-Methylstyrol mit Acrylnitril und gegebenenfalls mit Methylmethacrylat.

Die Styrol-Acrylnitril-Copolymerisate sind bekannt und lassen sich durch radikalische Polymerisation, insbesondere durch Emulsions-, Suspensions-, Lösungsoder Massepolymerisation herstellen. Die Copolymerisate besitzen vorzugsweise Molekulargewichte $\overline{M}_w$ (Gewichtsmittel, ermittelt durch Lichtstreuung oder Sedimentation) zwischen 15 000 und 200 000 g/mol.

Besonders bevorzugte Copolymerisate sind auch statistisch aufgebaute Copolymerisate aus Styrol und Maleinsäureanhydrid, die bevorzugt durch eine kontinuierliche Masse oder Lösungspolymerisation bei unvollständigen Umsätzen aus dem entsprechenden Monomeren hergestellt werden können.

Die Anteile der beiden Komponenten der erfindungsgemäß geeigneten statistisch aufgebauten Styrol-Maleinsäureanhydrid-Copolymeren können innerhalb weiter Grenzen variiert werden. Der bevorzugte Gehalt an Maleinsäureanhydrid liegt bei 5 bis 25 Gew.-%.

Anstelle von Styrol können die Polymeren auch kemsubstituierte Styrole, wie p-Methylstyrol, 2,4-Dimethylstyrol und andere substituierte Styrole, wie α-Methylstyrol, enthalten.

Die Molekulargewichte (Zahlenmittel $\overline{M}_n$) der Styrol-Maleinsäureanhydrid-Copolymeren können über einen weiten Bereich variieren. Bevorzugt ist der Bereich von 60 000 bis 200 000 g/mol. Bevorzugt ist für diese Produkte eine Grenzviskosität von 0,3 bis 0,9 (gemessen in Dimethylformamid bei 25°C; siehe hierzu Hoffmann, Krömer, Kuhn, Polymeranalytik I, Stuttgart 1977, Seite 316 ff.).

Geeignet als thermoplastische Kunststoffe sind auch Pfropf-Copolymerisate. Diese umfassen Pfropfcopolymerisate mit kautschukelastischen Eigenschaften, die im wesentlichen aus mindestens 2 der folgenden Monomeren erhältlich sind: Chloropren, Butadien-1,3, Isopropen, Styrol, Acrylnitril, Ethylen, Propylen, Vinylacetat und (Meth)-Acrylsäureester mit 1 bis 18 C-Atomen in der Alkoholkomponente; also Polymerisate, wie sie z.B. in "Methoden der Organischen Chemie" (Houben-Weyl), Bd. 14/1, Georg Thieme-Verlag, Stuttgart 1961, S. 393-406 und in C.B. Bucknall, "Toughened Plastics", Appl. Science Publishers, London 1977, beschrieben sind. Bevorzugte Pfropfpolymerisate sind partiell vernetzt und besitzen Gelgehalte von über 20 Gew.-%, vorzugsweise über 40 Gew.-%, insbesondere über 60 Gew.-%.

Bevorzugt zum Einsatz kommende Pfropf-Copolymerisate sind z.B. Copolymerisate aus Styrol und/oder Acrylnitril und/oder (Meth)-Acrylsäurealkylestern gepfropft auf Polybutadiene, Butadien/Styrol-Copolymerisate und Acrylatkautschuke; d.h. Copolymerisate der in der DE-OS 1 694 173 (= US-PS 3 564 077) beschriebenen Art; mit Acryl- oder Methacrylsäurealkylestern, Vinylacetat, Acrylnitril, Styrol und/oder Alkylstyrolen gepfropfte Polybutadiene, Butadien/Styrol- oder Butadien/Acrylnitril-Copolymerisate, Polyisobutene oder Polyisoprene, wie sie z.B. in der DE-OS 2 348 377 (= US-PS 3 919 353) beschrieben sind.

Besonders bevorzugte Polymerisate sind z.B. ABS-Polymerisate, wie sie z.B. in der DE-OS 2 035 390 (= US-PS 3 644 574) oder in der DE-OS 2 248 242 (= GB-PS 1 409 275) beschrieben sind.

Die Pfropf-Copolymerisate können nach bekannten Verfahren wie Masse-, Suspension, Emulsions- oder Masse-Suspensionsverfahren hergestellt werden.

Als thermoplastische Polyamide können Polyamid 66 (Polyhexamethylenadipinamid) oder Polyamide von cyclischen Lactamen mit 6 bis 12 C-Atomen, bevorzugt von Laurinlactam und besonders bevorzugt ε-Caprolactam = Polyamid 6 (Polycaprolactam) oder Copolyamide mit Hauptbestandteilen 6 oder 66 oder Abmischungen mit Hauptbestandteil der genannten Polyamide verwendet werden. Bevorzugt ist durch aktivierte anionische Polymerisation hergestelltes Polyamid 6 oder durch aktivierte anionische Polymerisation hergestelltes Copolyamid mit Hauptbestandteil Polycaprolactam.

Als keramische Materialien eignen sich Metalloxide, Metallcarbide, Metallnitride der oben genannten Metalle sowie Verbunde dieser Materialien.

Die Oberflächentopographie einer beliebigen Oberfläche läßt sich grundsätzlich durch eine Zusammensetzung aus Fourierkomponenten der Ortsfrequenzen $f_x$ und $f_y$ und der zu den Frequenzen zugehörigen Amplituden $a(f_x)$ und $a(f_y)$ beschreiben. $\lambda_x=f_x^{-1}$ und $\lambda_y=f_y^{-1}$ sind dabei die Strukturlängen der Koordinaten x und y. In der Technik ist die Verwendung der sog. spektralen Leistungsdichte $S_2(f_x, f_y)$ gebräuchlich. Die gemittelte spektrale Leistungsdichte ist proportional zum Mittelwert aller quadratischen Amplituden bei den jeweiligen Ortsfrequenzen $f_x$ und $f_y$. Handelt es sich um eine isotrope Oberfläche, läßt sich die Oberflächentopographie durch eine, über den Polarwinkel gemittelte spektrale Leistungsdichte PSD(f) charakterisieren. Die spektrale Leistungsdichte PSD(f) ist immer noch eine zweidimensionale Funktion der Dimension $[\text{Länge}]^4$, bei der jedoch beide Richtungen identisch sind und nur eine betrachtet wird. Diese Berechnung ist z.B. in der Veröffentlichung von C. Ruppe und A. Duparré, Thin Solid Films, 288, (1996), Seite 9 in Gleichung (2) beschrieben.
Je nachdem welches Meßverfahren zur Bestimmung der Topographie eingesetzt wird, resultiert die spektrale Leistungsdichte unmittelbar, oder muß durch eine Fourier-Transformation von Höhenprofildaten der Topographie in die PSD(f) umgerechnet werden. Diese Umrechnung ist z.B. in der Veröffentlichung von C. Ruppe und A. Duparré, Thin Solid Films, 288, (1996), Seite 9 beschrieben.

Die Oberflächentopographie einer ultraphoben Oberfläche unter einem Flüssigkeitstropfen weist Erhebungen und Vertiefungen auf, deren Höhe bzw. Tiefe zwischen 0,1 nm und 1 mm variieren. Aufgrund dieser enormen Bandbreite ist es derzeit noch nicht möglich, die Oberflächentopographie mit einem einzigen Meßverfahren zu bestimmen, so daß 3 Meß- und Auswertungsverfahren miteinander kombiniert werden müssen, um die Oberflächentopographie genau bestimmen zu können. Diese Meßverfahren sind:

1. Weißlichtinterferometrie (WLI)
2. Rasterkraftmikroskopie (AFM)
3. Rastertunnelmikroskopie (STM).

Mit diesen Meßverfahren wird die PSD(f) jeweils abschnittsweise in relativ schmalen überlappenden Ortfrequenzbereichen $\Delta f$ bestimmt. Anschließend wird diese abschnittsweise ermittelte spektrale Leistungsdichte zu der gesamten PSD(f) im Ortsfrequenzbereich von $f=10^{-3}$ $\mu m^{-1}$ bis $f=10^3$ $\mu m^{-1}$ zusammengesetzt. Die Technik des Zusammensetzens von abschnittsweise ermittelten PSD-Kurven ist z.B. bei C. Ruppe und A. Duparré, Thin Solid Films, 288, (1996), Seite 10 gezeigt.

Weißlichtinterferometrie (WLI) wird zur Bestimmung der spektralen Leistungsdichte im Ortsfrequenzbereich von $\Delta f = 1 \times 10^{-3}$ $\mu m^{-1}$ - 1 $\mu m^{-1}$,eingesetzt, wobei mit dem:

Meßfeld: 1120 µm x 1120 µm ein Ortsfrequenzbereich von:

$$\Delta f = 9 \times 10^{-4}\ \mu m^{-1} \text{ bis } 2 \times 10^{-1}\ \mu m^{-1},$$

dem Meßfeld: 280 µm x 280 µm ein Ortsfrequenzbereich von:

$$\Delta f = 4 \times 10^{-3}\ \mu m^{-1} \text{ bis } 9 \times 10^{-1}\ \mu m^{-1},$$

dem Meßfeld: 140 µm x 140 µm ein Ortsfrequenzbereich von:

$$\Delta f = 7 \times 10^{-3}\ \mu m^{-1} \text{ bis } 2 \times 10^{0}\ \mu m^{-1} \text{ vermessen wird.}$$

Bei dieser Meßmethode wird ein Höhenprofil z(x, y) mit einem Weißlichtinterferometer bestimmt, wobei z die Höhe über einer beliebigen Referenzhöhe $z_0$ an dem jeweiligen Ort x bzw. y ist. Der genaue Versuchsaufbau und das Meßverfahren kann aus R.J. Recknagel, G. Notni, Optics Commun. 148, 122-128 (1998) entnommen werden. Die Umrechnung des Höhenprofils z(x, y) erfolgt analog dem Vorgehen bei der unten beschriebenen Rasterkraftmikroskopie bzw. Rastertunnelmikroskopie.

Rasterkraftmikroskopie (AFM) wird zur Bestimmung der spektralen Leistungsdichte im Ortsfrequenzbereich

von $\Delta f = 1 \times 10^{-2}\ \mu m^{-1} - 1 \times 10^{2}\ \mu m^{-1}$ eingesetzt und ist ein dem Fachmann allgemein bekanntes Meßverfahren, bei dem ein Höhenprofil $z_{m,n}$ der Oberfläche mit einem Rasterkraftmikroskop im Kontakt- oder Tapping-Modus aufgenommen wird. Bei diesem Meßverfahren werden unterschiedliche Scanbereiche (Abtastbereiche) L x L eingesetzt. Mit diesen Abtastbereichen und der Anzahl der Datenpunkte N errechnet sich die minimale bzw. maximale Ortsfrequenz, die pro Abtastbereich untersucht werden kann, wobei gilt: $f_{max}$=N/2L bzw. $f_{min}$=1/L. Vorzugsweise werden 512 Meßpunkte pro Abtastbereich eingesetzt, so daß im

Abtastbereich 50 µm x 50 µm ein Ortsfrequenzbereich von:

$$\Delta f = 2 \times 10^{-2}\ \mu m^{-1} \text{ bis } 5\ \mu m^{-1},$$

im Abtastbereich 10 µm x 10 µm ein Ortsfrequenzbereich von:

$$\Delta f = 1 \times 10^{-1}\ \mu m^{-1} \text{ bis } 3 \times 10^{1}\ \mu m^{-1},$$

und im Abtastbereich 1 µm x 1 µm ein Ortsfrequenzbereich von:

$$\Delta f = 1\ \mu m^{-1} \text{ bis } 3 \times 10^{2}\ \mu m^{-1} \text{ vermessen wird.}$$

Das Höhenprofil $z_{m,n}$ wird auf eine beliebige Referenzhöhe $z_0$ bezogen. m, n sind Meßpunkte in x- bzw. y-Richtung, die in einem äquidistanten Abstand ΔL aufgenommen werden. Die Höhenprofildaten werden gemäß den Gleichungen 1 und 2 der Veröffentlichung von C. Ruppe und A. Duparré, Thin Solid Films, 288, (1996), Seite 9 in die gemittelte spektrale Leistungsdichte PSD umgerechnet.

Rastertunnelmikroskopie (STM) wird zur Bestimmung der spektralen Leistungsdichte im Ortsfrequenzbereich von $\Delta f = 1 \times 10^{1}\ \mu m^{-1} - 1 \times 10^{3}\ \mu m^{-1}$ eingesetzt und ist ein dem Fachmann allgemein bekanntes Meßverfahren, bei dem ein Höhenprofil $z_{m,n}$ der Oberfläche mit einem Rastertunnelmikroskop aufgenommen wird. Auch bei diesem Meßverfahren werden unterschiedliche Abtastbereiche L x L eingesetzt. Mit diesen Abtastbereichen und der Anzahl der Datenpunkte N errechnet sich die minimale bzw. maximale Ortsfrequenz, die pro Abtastbereich untersucht werden kann, wobei gilt:
$f_{maX}$=N/2L bzw. $f_{min}$=1/L. Vorzugsweise werden 512 Meßpunkte pro Abtastbereich eingesetzt, so daß im

Abtastbereich 0,5 µm x 0,5 µm ein Ortsfrequenzbereich von:

$$\Delta f = 2\ \mu m^{-1} \text{ bis } 5 \times 10^{2}\ \mu m^{-1},$$

Abtastbereich 0,2 µm x 0,2 µm ein Ortsfrequenzbereich von:

$$\Delta f = 5\ \mu m^{-1} \text{ bis } 1 \times 10^{3}\ \mu m^{-1},$$

Abtastbereich 0, µm x 0,1 µm ein Ortsfrequenzbereich von:

$$\Delta f = 1 \times 10^{1}\ \mu m^{-1} \text{ bis } 3 \times 10^{3}\ \mu m^{-1}$$

vermessen wird.

Das Höhenprofil $z_{m,n}$ wird auf eine beliebige Referenzhöhe $z_0$ bezogen. m,n sind Meßpunkte in x- bzw. y-Richtung, die in einem äquidistanten Abstand ΔL aufgenommen werden. Die Höhenprofildaten werden gemäß den Gleichungen 1 und 2 der Veröffentlichung von C. Ruppe und A. Duparré, Thin Solid Films, 288, (1996), Seite 9 in die gemittelte spektrale Leistungsdichte PSD umgerechnet.

Der genaue Versuchsaufbau und die Durchführung von AFM und STM Messungen ist z.B. in der Veröffentlichung von S.N. Magonov, M.-H. Whangbo, Surface Analysis with STM and AFM, VCH, Weinheim 1996, insbesondere auf den Seiten 47-62 beschrieben.

Die mit den unterschiedlichen Meßverfahren bzw. mit den unterschiedlichen Abtastbereichen erhaltenen

PSD-Kurven, werden zu einer Kurve PSD(f) im Ortsfrequenzbereich von $10^{-3}$ $\mu m^{-1}$ bis $10^{3}$ $\mu m^{-1}$ zusammengesetzt. Die Zusammensetzung der PSD(f)-Kurve erfolgt gemäß einer Vorgehensweise wie sie bei C. Ruppe und A. Duparré, Thin Solid Films, 288, (1996), Seite 10-11 beschrieben ist. Die Figuren 1 - 4 zeigen das Ergebnis für PSD(f) Kurven in doppeltlogarithmischer Darstellung, aufgetragen als log (PSD(f) / $nm^4$) als Funktion von log (f/ $\mu m^{-1}$).
Spektrale Leistungsdichten von dieser Art sind auch für viele andere Oberflächen seit langem bekannt und für verschiedenste Zwecke gebräuchlich, vgl. z.B. J. C. Stover, Optical Scattering, 2nd Edition, SPIE Press, Bellingham, Washington, USA 1995, Kapitel 2, Seite 29ff. und Kapitel 4, Seite 85ff..
Um eine bessere Veranschaulichung der Topographie der Oberflächen für die hier verfolgten Zwecke zu erreichen, wird aus den spektralen Leistungsdichten PSD(f) eine ortsfrequensabhängige Amplitude a(f) der sinusförmigen Fourierkomponenten errechnet. Hierzu verwendet man die Formeln (4.19) auf Seite 103 sowie die Tabelle 2.1 auf Seite 34 und Tabelle 2.2 auf Seite 37 aus . J. C. Stover, Optical Scattering, 2nd Edition, SPIE Press, Bellingham, Washington, USA 1995.
Die mit den zugehörigen Strukturlängen $\lambda=f^{-1}$ normierten Amplituden a(f) der sinusförmigen Fourierkomponenten sind in den Figuren 5 - 8 gegen die logarithmische Ortsfrequenz log( f / $\mu m^{-1}$ ) in der Funktion S als

$$S(\log f) = a(f) \cdot f \qquad (1)$$

aufgetragen. Der Erfindung liegt die überraschende Erkenntnis zugrunde, daß eine Oberfläche, die man mit einer Struktur versieht, bei der das Integral der Funktion S(log f) = a(f) f errechnet zwischen den Integrationsgrenzen $f_1/\mu m^{-1} = -3$ und $f_2/\mu m^{-1} = 3$, größer 0,5 beträgt und die aus hydrophobem Material besteht oder mit hydrophobem Material beschichtet ist, ultraphobe Eigenschaften aufweist, so daß ein Wassertropfen auf dieser Oberfläche in der Regel einen Randwinkel > 150° aufweist.

Diese völlig überraschende neue Erkenntnis ermöglicht die Vorhersage von vielen Details zu möglichen Verfahrensschritten bei der Herstellung von ultraphoben Oberflächen. Die Kemaussage der Erkenntnis ist folgende: Die Figuren 5-8 zeigen die mit den Wellenlängen $\lambda=f^1$ normierten Strukturamplituden a(f)·f für verschiedene Frequenzen f auf der logarithmischen Frequenzskala log(f). Eine Wert für a(f)·f = 0,5 bedeutet beispielsweise, dass die normierte Amplitude, also die "Rauheit" dieser Fourierkomponente das 0,5 fache ihrer Wellenlänge $\lambda=f^1$ beträgt. Das Integral der Gleichung (1) sagt somit aus, dass

- der Mittelwert aller normierten Amplituden a(f)·f bei den einzelnen verschiedenen Frequenzen einen Wert von 0,5 überschreiten muss, d.h. die über alle Frequenzen gemittelte Rauhigkeit maximiert werden muss, um zu einer ultraphoben Oberfläche zu gelangen.
- verschiedene Ortsfrequenzen mit dem gleichen Gewicht in diese Summe eingehen (durch die log(f) Darstellung). Es ist somit unbedeutend in welchem Frequenzbereich die einzelnen Rauhigkeiten liegen.

Auf der Basis dieser Erkenntnis weiß der Fachmann, dass beispielsweise die Aufrauhung einer Oberfläche durch kugelförmige Partikel einer einheitlichen Größe ungünstig ist. Günstig ist jedoch die zusätzliche Aufrauhung der Partikeloberflächen durch kleinere Strukturen, z.B. durch kleine Partikel, die auf den großen aufsitzen oder anhaften, nicht aber neben den großen Partikeln getrennt vorliegen.

Weiterhin wird deutlich, dass beispielsweise bei der Aufrauhung einer Oberfläche durch Einbringung von Kratzern (z.B. durch Schleifpartikel) darauf zu achten ist, dass die Vertiefungen einer Kratzspur ihrerseits wieder möglichst rauh sein müssen innerhalb der nächsten Größenordnung der Abmessung. Ist dies nicht der Fall, sind die primären Vertiefungen ihrerseits wieder in einem weiteren Arbeitsgang aufzurauhen.

Dabei sei bemerkt, daß die hier beschriebene neue Erkenntnis keine Einschränkung hinsichtlich der Form oder des Profils der Vertiefungen bzw. rauhen Strukturen macht. Beim Beispiel von rauhen Partikeln, die auf eine Oberfläche aufgebracht werden und die notwendige Struktur für eine ultraphobe Oberfläche bilden, können die feineren Unterstrukturen auf den Partikeln selbst eine völlig andere Form haben (d.h. ein anderes Ortsfrequenzspektrum) als die Struktur, die die Partikel selber auf der Oberfläche bilden.

Mit der Bestimmung frequenzabhängiger Amplituden der Fourierkomponenten mit Hilfe der spektralen Leistungsdichte in der oben genannten Form wird darüber hinaus eine nicht bekannte Möglichkeit eröffnet, unterschiedliche Materialien mit völlig unterschiedlicher Oberflächenstruktur auf ihre ultraphobe Eigenschaft hin zu prüfen und eine Charakterisierung zu erreichen.

Gegenstand der Erfindung ist ferner ein Verfahren zur Prüfung von Oberflächen auf ultraphobe Eigenschaften, dadurch gekennzeichnet, daß die Oberfläche dünnschichtig mit einem Edelmetall oder GaAs als Haftvermittler, insbesondere mit Gold, insbesondere einer Schichtdicke von 10 bis 100nm, durch Zerstäubung beschichtet, mit einem Phobierungshilfsstoff, bevorzugt mit Dekanthiol beschichtet wird, anschließend die Oberflächentopographie, insbesondere mittels einer Kombination von Rastertunnelmikroskopie, Rasterkraftmikroskopie und Weißlichtinterferometrie

analysiert wird und aus den gemessenen Daten die Ortsfrequenzen f der einzelnen Fourierkomponenten und deren Amplituden a(f) ausgedrückt durch das Integral der Funktion S

$$S(\log f) = a(f) \cdot f \qquad (1)$$

errechnet zwischen den Integrationsgrenzen $\log (f_1/\mu m^{-1}) = -3$ und $\log (f_2/\mu m^{-1}) = 3$ gebildet wird und ggf. zusätzlich der Randwinkel von Wasser auf der so behandelten Oberfläche gemessen wird.

Durch die Beschichtung mit einem Haftvermittler (typischerweise Gold von 10 bis 100 nm) und die Wahl eines einheitlichen Phobierungsmittels wird die Untersuchung unterschiedlichster Materialien, deren Oberfläche grundsätzlich zur Ausbildung ultraphober Oberflächeneigenschaften geeignet ist, materialunabhängig möglich. So werden verschiedene Oberflächenstrukturen untereinander vergleichbar.

Bevorzugt ist eine ultraphobe Oberfläche, dadurch gekennzeichnet, dass die Oberfläche eine Beschichtung mit einem hydrophoben Phobierungshilfsmittel, insbesondere einer anionischen, kationischen, amphoteren oder nichtionischen, grenzflächenaktiven Verbindung aufweist.

Als Phobierungshilfsmittel sind grenzflächenaktive Verbindungen mit beliebiger Molmasse anzusehen. Bei diesen Verbindungen handelt es sich bevorzugt um kationische, anionische, amophotere oder nicht-ionische grenzflächenaktive Verbindungen, wie sie z.B. im Verzeichnis "Surfactants Europa, A Dictionary of Surface Active Agents available in Europe, Edited by Gordon L. Hollis, Royal Society of Chemistry, Cambridge, 1995 aufgeführt werden.

Als anionische Phobierungshilfsmittel sind beispielsweise zu nennen: Alkylsulfate, Ethersulfate, Ethercarboxylate, Phosphatester, Sulfosuccinate, Sulfosuccinatamide, Paraffinsulfonate, Olefinsulfonate, Sarcosinate, Isothionate, Taurate und Lingninische Verbindungen.

Als kationische Phobierungshilfsmittel sind beispielsweise quartemäre Alkylammoniumverbindungen und Imidazole zu nennen

Amphotere Phobierungshilfsmittel sind zum Beispiel Betaine, Glycinate, Propionate und Imidazole.

Nichtionische Phobierungshilfsmittel sind beispielsweise: Alkoxylate, Alkyloamide, Ester, Aminoxide, Alkypolyglykoside, Alkylsulfide und Alkyldisulfide. Weiterhin kommen in Frage: Umsetzungsprodukte von Alkylenoxiden mit alkylierbaren Verbindungen, wie z. B. Fettalkoholen, Fettaminen, Fettsäuren, Phenolen, Alkylphenolen, Arylalkylphenolen, wie Styrol-Phenol-Kondensate, Carbonsäureamiden und Harzsäuren.

Besonders bevorzugt sind Phobierungshilfsmittel bei denen 1 bis 100 %, besonders bevorzugt 60 bis 95 % der Wasserstoffatome durch Fluoratome substituiert sind. Beispielhaft seien perfluoriertes Alkylsulfat, perfluorierte Alkylsulfonate, perfluorierte Alkylsulfide, perfluorierte Alkyldisulfide, perfluorierte Alkylphosphonate, perfluorierte Alkylphosphinate und perfluorierte Carbonsäuren genannt.

Bevorzugt werden als polymere Phobierungshilfsmittel zur hydrophoben Beschichtung oder als polymeres hydrophobes Material für die Oberfläche Verbindungen mit einer Molmasse $M_w$>500 bis 1.000.000, bevorzugt 1.000 bis 500.000 und besonders bevorzugt 1500 bis 20.000 eingesetzt. Diese polymeren Phobierungshilfsmittel können nichtionische, anionische, kationische oder amphotere Verbindungen sein. Ferner können diese polymeren Phobierungshilfsmittel Homo- und Copolymerisate, Pfropf- und Pfropfcopolymerisate sowie statistische Blockpolymere sein.

Besonders bevorzugte polymere Phobierungshilfsmittel sind solche vom Typ AB-, BAB- und ABC-Blockpolymere. In den AB- oder BAB-Blockpolymeren ist das A-Segment ein hydrophiles Homopolymer oder Copolymer, und der B-Block ein hydrophobes Homopolymer oder Copolymer oder ein Salz davon.

Besonders bevorzugt sind auch anionische, polymere Phobierungshilfsmittel, insbesondere Kondensationsprodukte von aromatischen Sulfonsäuren mit Formaldehyd und Alkylnaphthalinsulfonsäuren oder aus Formaldehyd, Naphthalinsulfonsäuren und/oder Benzolsulfonsäuren, Kondensationsprodukte aus gegebenenfalls substituiertem Phenol mit Formaldehyd und Natriumbisulfit.

Weiterhin bevorzugt sind Kondensationsprodukte, die durch Umsetzung von Naphtholen mit Alkanolen, Anlagerungen von Alkylenoxid und mindestens teilweiser Überführung der terminalen Hydroxygruppen in Sulfogruppen oder Halbester der Maleinsäure und Phthalsäure oder Bernsteinsäure erhältlich sind.

In einer anderen bevorzugten Ausführung ist das Phobierungshilfsmittel aus der Gruppe der Sulfobernsteinsäureester sowie Alkylbenzolsulfonate. Weiterhin bevorzugt sind sulfatierte, alkoxylierte Fettsäuren oder deren Salze. Als alkoxylierte Fettsäurealkohole werden insbesondere solche mit 5 bis 120, mit 6 bis 60, ganz besonders bevorzugt mit 7 bis 30 Ethylenoxideinheiten versehene $C_6$-$C_{22}$-Fettsäurealkohole, die gesättigt oder ungesättigt sind, insbesondere Stearylalkohol, verstanden. Die sulfatierten alkokylierten Fettsäurealkohole liegen vorzugsweise als Salz, insbesondere als Alkali- oder Aminsalze, vorzugsweise als Diethylaminsalz vor.

Weiterer Gegenstand der Erfindung ist ein Verfahren zur Herstellung einer ultraphoben Oberfläche, dass dadurch gekennzeichnet ist, dass eine Form, die das Negativ einer für eine ultraphobe Oberfläche geeigneten Oberflächentopographie aufweist, mit einer Mischung aus einem Kunststoff und einem hydrophoben oder insbesondere oleophoben Additiv, das sich beim Aushärten als dünner Film zwischen der Formoberfläche und dem Kunststoffformkörper abscheidet, abgeformt wird.

In einer anderen bevorzugten Ausführungsform wird die Form mit einem Polymer abgegossen und der Polymer-Formkörper anschließend mit einem hydrophoben oder insbesondere oleophoben Überzug versehen.

Eine Form im Sinne der Erfindung ist jede beliebige Form, die mit Polymeren oder Polymermischungen ausgegossen werden kann. Diese Form weist eine Oberfläche auf, deren Oberflächentopographie das Negativ zu einer beliebigen ultraphoben Oberfläche ist.

Vorzugsweise entspricht die Oberflächentopographie einer ultraphoben Oberfläche jedoch der einer gebeizten, eloxierten und gesealten (d.h. mit Heißwasser oder Wasserdampf behandelten) Aluminium-Oberfläche, wie sie durch die in der deutschen Patentanmeldung mit dem Aktenzeichen 19860138.7 offenbarten Verfahren erhältlich sind, wobei die Oberflächen keinen hydrophoben Überzug aufweisen müssen. Dabei wird die Oberfläche eines Aluminiumträgers, insbesondere durch eine saure elektrochemische Beizung, eine anodische Oxidation, sowie in heißem Wasser oder Wasserdampf einer Temperatur von 50 bis 100°C behandelt, gegebenenfalls mit einer Haftvermittlerschicht beschichtet.

Das Abformen der Oberfläche kann je nach verwendetem Material durch Ausgießen oder Anspritzen mit verflüssigtem oder gelöstem thermoplastischen Kunststoff bzw. mit noch nicht ausgehärtetem Kunststoff erfolgen. Entsprechende Techniken sind bekannt und dem Fachmann der Kunststofftechnik geläufig.

Weiterer Gegenstand der Erfindung ist ein Verfahren zur Herstellung einer Oberfläche mit ultraphoben Eigenschaften, das dadurch gekennzeichnet ist, dass die Oberfläche von einer positiven Form, die eine für eine ultraphobe Oberfläche geeignete Oberflächenstruktur aufweist, mit einer Mischung aus einem Kunststoff und einem hydrophoben oder insbesondere oleophoben Additiv, das sich beim Aushärten als dünner Film zwischen der Formoberfläche und dem Kunststoffformkörper abscheidet, abgeformt wird.

In einer anderen bevorzugten Ausführungsform wird die Form mit einem Polymer abgegossen und der Polymer-Formkörper anschließend mit einem hydrophoben oder insbesondere oleophoben Überzug versehen.

Eine Form im Sinne der Erfindung ist jede beliebige Form, die mit Polymeren oder Polymermischungen ausgegossen werden kann. Diese Form weist eine Oberfläche auf, deren Oberflächentopographie das Negativ zu einer beliebigen Oberfläche ist, die strukturelle Voraussetzung für eine ultraphobe Oberfläche bietet.

Vorzugsweise entspricht die Oberflächentopographie einer ultraphoben Oberfläche jedoch der einer gebeizten, eloxierten und gesealten (d.h. mit Heißwasser oder Wasserdampf behandelten) Aluminium-Oberfläche, wie sie durch die in der deutschen Patentanmeldung mit dem Aktenzeichen 19860138.7 offenbarten Verfahren erhältlich sind, wobei die Oberflächen keinen hydrophoben Überzug aufweisen müssen. Dabei wird die Oberfläche eines Aluminiumträgers, insbesondere durch eine saure elektrochemische Beizung, eine anodische Oxidation, sowie in heißem Wasser oder Wasserdampf einer Temperatur von 50 bis 100°C behandelt, gegebenenfalls mit einer Haftvermittlerschicht beschichtet.

Das Abformen der Oberfläche kann je nach verwendetem Material durch Ausgießen oder Anspritzen mit verflüssigtem oder gelöstem thermoplastischen Kunststoff bzw. mit noch nicht ausgehärtetem Kunststoff erfolgen. Entsprechende Techniken sind bekannt und dem Fachmann der Kunststofftechnik geläufig.

Dem erfindungsgemäßen Verfahren liegt die überraschende Erkenntnis zugrunde, dass eine Oberfläche, deren Topographie die Voraussetzungen für eine ultraphobe Oberfläche aufweist, direkt abgeformt werden kann und aus dem erhaltenen Negativ wieder eine ultraphobe Oberfläche resultiert. Durch diese Verfahrensweise erübrigt sich die aufwendige Erstellung eines Negatives der Topographie einer ultraphoben Oberfläche, wie sie vom Stand der Technik gelehrt wird.

Mit dem erfindungsgemäßen Verfahren können ultraphobe Oberflächen hergestellt werden, bei denen der Kontaktwinkel eines Tropfens, der auf der Oberfläche liegt, ≥155° beträgt. Gegenstand der Erfindung sind deshalb auch die durch das erfindungsgemäße Verfahren erhaltenen ultraphoben Oberflächen.

Für die Durchführung beider Abformverfahren geeignete Kunststoffe sind duroplastische oder thermoplastische Kunststoffe.

Der duroplastische Kunststoff ist insbesondere aus der Reihe: Diallylphthalat-Harz, Epoxid-Harz, Harnstoff-Formaldehyd-Harz, Melamin-Formaldehyd-Harz, Melamin-Phenol-Formaldehyd-Harz, Phenol-Formaldehyd-Harz, Polyimid, Silikonkautschuk und ungesättigtes Polyesterharz ausgewählt.

Der thermoplastische Kunststoff ist insbesondere aus der Reihe: thermoplastisches Polyolefin, z. B. Polypropylen oder Polyethylen, Polycarbonat, Polyestercarbonat, Polyester (z.B. PBT oder PET), Polystyrol, Styrolcopolymerisat, SAN-Harz, kautschukhaltiges Styrol-Pfropf-Copolymerisat, z.B. ABS-Polymerisat, Polyamid, Polyurethan, Polyphenylensulfid, Polyvinylchlorid oder beliebigen möglichen Mischungen der genannten Polymere ausgewählt.

Die Form wird erfindungsgemäß mit einer Mischung ausgegossen die aus einem Polymer wie PC oder PMMA und einem hydrophoben und/oder oleophoben Additiv besteht, das sich beim Aushärten als dünner Film zwischen der Formoberfläche des Negativs und dem gebildeten Polymerformkörper abscheidet.

Als Additiv sind grenzflächenaktive Verbindungen mit beliebiger Molmasse anzusehen. Bei diesen Verbindungen handelt es sich bevorzugt um kationische, anionische, amphotere oder nicht-ionische grenzflächenaktive Verbindungen, wie sie z.B. im Verzeichnis "Surfactants Europa, A Dictionary of Surface Active Agents available in Europe, Edited by Gordon L. Hollis, Royal Socity of Chemistry, Cambridge, 1995 aufgeführt werden.

Als anionische Additive sind beispielsweise zu nennen: Alkylsulfate, Ethersulfate, Ethercarboxylate, Phosphatester, Sulfosucinate, Sulfosuccinatamide, Paraffinsulfonate, Olefinsulfonate, Sarcosinate, Isothionate, Taurate und Lingninische Verbindungen.

Als kationische Additive sind beispielsweise quartemäre Alkylammoniumverbindungen und Imidazole zu nennen

Amphotere Additive sind zum Beispiel Betaine, Glycinate, Propionate und Imidazole.

Nichtionische Additive sind beispielsweise: Alkoxylate, Alkyloamide, Ester, Aminoxide, Alkypolyglykoside, Alkylsulfide und Alkyldisulfide. Weiterhin kommen in Frage: Umsetzungsprodukte von Alkylenoxiden mit alkylierbaren Verbindungen, wie z.B. Fettalkoholen, Fettaminen, Fettsäuren, Phenolen, Alkylphenolen, Arylalkylphenolen, wie Styrol-Phenol-Kondensate, Carbonsäureamiden und Harzsäuren.

Besonders bevorzugt sind Additive bei denen 1 bis 100 %, besonders bevorzugt 60 bis 95 % der Wasserstoffatome durch Fluoratome substituiert sind. Beispielhaft seien perfluoriertes Alkylsulfat, perfluorierte Alkylsulfonate, perfluorierte Alkylsulfide, perfluorierte Alkyldisulfide, perfluorierte Alkylphosphonate, perfluorierte Alkylphosphinate und perfluorierte Carbonsäuren genannt.

Bevorzugt werden als polymere Additive zur hydrophoben Beschichtung oder als polymeres hydrophobes Material für die Oberfläche Verbindungen mit einer Molmasse $M_w$>500 bis 1.000.000, bevorzugt 1.000 bis 500.000 und besonders bevorzugt 1500 bis 20.000 eingesetzt. Diese polymeren Additive können nichtionische, anionische, kationische oder amphotere Verbindungen sein. Ferner können diese polymeren Additive Homo- und Copolymerisate, Pfropf- und Pfropfcopolymerisate sowie statistische Blockpolymere sein.

Besonders bevorzugte polymere Additive sind solche vom Typ AB-, BAB- und ABC-Blockpolymere. In den AB- oder BAB-Blockpolymeren ist das A-Segment ein hydrophiles Homopolymer oder Copolymer, und der B-Block ein hydrophobes Homopolymer oder Copolymer oder ein Salz davon.

Besonders bevorzugt sind auch anionische, polymere Additive, insbesondere Kondensationsprodukte von aromatischen Sulfonsäuren mit Formaldehyd und Alkylnaphthalinsulfonsäuren oder aus Formaldehyd, Naphthalinsulfonsäuren und/oder Benzolsulfonsäuren, Kondensationsprodukte aus gegebenenfalls substituiertem Phenol mit Formaldehyd und Natriumbisulfit.

Weiterhin bevorzugt sind Kondensationsprodukte, die durch Umsetzung von Naphtholen mit Alkanolen, Anlagerungen von Alkylenoxid und mindestens teilweiser Überführung der terminalen Hydroxygruppen in Sulfogruppen oder Halbester der Maleinsäure und Phthalsäure oder Bernsteinsäure erhältlich sind.

In einer anderen bevorzugten Ausführung ist das Additiv aus der Gruppe der Sulfobernsteinsäureester sowie Alkylbenzolsulfonate. Weiterhin bevorzugt sind sulfatierte, alkoxylierte Fettsäuren oder deren Salze. Als alkoxylierte Fettsäurealkohole werden insbesondere solche mit 5 bis 120, mit 6 bis 60, ganz besonders bevorzugt mit 7 bis 30 Ethylenoxideinheiten versehene $C_6$-$C_{22}$-Fettsäurealkohole, die gesättigt oder ungesättigt sind, insbesondere Stearylalkohol, verstanden. Die sulfatierten alkokylierten Fettsäurealkohole liegen vorzugsweise als Salz, insbesondere als Alkali- oder Aminsalze, vorzugsweise als Diethylaminsalz vor.

Durch diese Verfahrensweise muss der Formkörper nicht mehr mit einem hydrophoben und oder oleophoben Überzug versehen werden, so dass gegebenenfalls ein Verfahrensschritt eingespart wird.

Die erfindungsgemäßen ultraphoben Oberflächen haben unter anderem den Vorteil, daß sie selbstreinigend sind, wobei die Selbstreinigung dadurch erfolgen kann, daß die Oberfläche von Zeit zu Zeit Regen oder bewegtem Wasser ausgesetzt wird. Durch die ultraphobe Eigenschaft der Oberfläche bedingt, rollen die Wassertropfen auf der Oberfläche ab und Schmutzpartikel, die auf der Oberfläche nur sehr schlecht haften, lagern sich an der Oberfläche der abrollenden Topfen ab und werden somit von der ultraphoben Oberfläche entfernt. Diese Selbstreinigung funktioniert nicht nur mit Wasser sondern auch mit Öl.

Gegenstand der Erfindung ist auch ein Werkstoff oder Baustoff, der eine erfindungsgemäße ultraphobe Oberfläche aufweist.

Für die erfindungsgemäßen Oberfläche gibt es eine Vielzahl von technischen Verwendungsmöglichkeiten. Gegenstand der Erfindung sind deshalb auch die folgenden Verwendungen der erfindungsgemäßen ultraphoben Oberflächen:

Mit der ultraphoben Oberfläche können Schiffsrümpfe beschichtet werden, um deren Reibungswiderstand zu reduzieren.

Eine weitere Anwendung der ultraphoben Oberfläche ist die Behandlung von Oberflächen, auf denen kein Wasser anhaften soll, um Vereisung zu vermeiden. Beispielhaft seien hier die Oberflächen von Wärmetauschern z.B. in Kühlschränken oder die Oberflächen von Flugzeugen genannt.

Die erfindungsgemäßen Oberflächen eignen sich außerdem zur Anbringung an Hausfassaden, Dächern, Denkmälem, um diese selbstreinigend zu machen.

Gegenstand der Erfindung ist auch die Verwendung der erfindungsgemäßen ultraphoben Oberfläche zur

reibungsvermindernden Auskleidung von Fahrzeugkarosserien, Flugzeug- oder Schiffsrümpfen.

Weiterer Gegenstand der Erfindung ist die Verwendung der ultraphoben Oberfläche als selbstreinigende Beschichtung oder Beplankung von Bauten, Dächern, Fenstern, keramischem Baumaterial, z.B. für Sanitäranlagen, Haushaltsgeräte.

Gegenstand der Erfindung ist ferner die Verwendung der ultraphoben Oberfläche als rostschützende Beschichtung von Metallgegenständen. Gegenstand der Erfindung ist auch die Verwendung der erfindungsgemäßen ultraphoben Oberfläche als transparente Scheibe im Falle von transparentem Substratmaterial oder als Deckschicht von transparenten Scheiben, insbesondere Glas- oder Kunststoffscheiben, insbesondere für Solarzellen, Fahrzeuge oder Gewächshäuser.

Gegenstand der Erfindung ist auch die Verwendung der ultraphoben Oberfläche als Beschichtung für Gefäße, in denen Flüssigkeiten gehandhabt werden z.B. um sie zu dosieren oder um sie darin durchzuleiten. Diese Gefäße können z.B. Kanülen, Schläuche oder Aufbewahrungsgefäße sein.

Weiterer Gegenstand der Erfindung ist ein Verfahren zur Herstellung einer Oberfläche mit ultraphoben Eigenschaften auf Basis einer $AlMg_3$ Legierung, dadurch gekennzeichnet, daß die Oberfläche gereinigt, geätzt, anodisch oxidiert, in kochendem Wasser passiviert, ggf. mit einem Edelmetall als Haftvermittler, insbesondere mit Gold einer Schichtdicke von 10 bis 100nm beschichtet, insbesondere durch Zerstäubung beschichtet wird und mit einem hydrophoben Material, insbesondere mit einer anionischen, kationischen, amphoteren oder nichtionischen, grenzflächenaktiven Verbindung als Phobierungshilfsstoff beschichtet wird.

Anstelle der Verwendung des Integrals der Funktion S

$$S(\log f) = a(f) \cdot f \qquad (1)$$

in den Grenzen $\log (f_1 / \mu m^{-1}) = -3$ und $\log (f_2 / \mu m^{-1}) = 3$ mit einem Wert größer 0,5 für die Beschreibung der ultraphoben Oberfläche kann ebenso das Integral der Funktion F

$$F(\log f) = 3 + \log(a(f) \cdot f) \qquad (2)$$

im Intervall $\log (f_1 / \mu m^{-1}) = -3$ bis $\log (f_2 / \mu m^{-1}) = 3$ verwendet werden. Im Bereich positiver Werte für F muss der Wert dieses Integrals größer 5 betragen, um eine Oberfläche mit ultraphoben Eigenschaften zu ergeben. Die Beschreibung mit Hilfe der Funktion F wurde bereits in der deutschen Patentanmeldung mit dem Aktenzeichen 19860136.0 verwendet.

Die Beschreibung (1) mit Hilfe der Funktion S hat jedoch den Vorteil, dass der Wert des Integrals von S(log f) sehr anschaulich ist. Dieser ist nämlich proportional zu der auf logarithmischer Frequenzskala im Intervall $-3 \le \log(f/\mu m^{-1}) \le 3$ gemittelten normierte Amplitude aller Fourierkomponenten $\langle a(f) \cdot f \rangle$. Die gefundene Bedingung zur Herstellung ultraphober Oberflächen lautet somit kurz: Der auf logarithmischer Frequenzskala bestimmte normierte Mittelwert aller Fourier-Amplituden $\langle a(f) \cdot f \rangle$ muss größer sein als 0,5/6 = 0.08. Für eine "durchschnittliche" Frequenz sollte die Fourieramplitude somit mindestens ca. 8% der Strukturlänge sein.

Um die Vergleichbarkeit der beiden Beschreibungen (1) und (2) zu erkennen, sind die Beispiele 1-6 am Schluss in Figur 10 und 11 wie in der Patentanmeldung DE 19860136.0 zusätzlich mit Hilfe der Funktion F angegeben.

Im folgenden wird die Erfindung anhand von Figuren in den Beispielen erläutert.

Figur 1 Darstellung der PSD(f)-Kurven von erfindungsgemäßen ultraphoben Oberflächen der Beispiele 1-6

Figur 2 Darstellung der PSD(f)-Kurven von erfindungsgemäßen ultraphoben Oberflächen der Beispiele 7-9

Figur 3 Darstellung der PSD(f)-Kurven von erfindungsgemäßen ultraphoben Oberflächen der Beispiele 10-11

Figur 4 Darstellung der PSD(f)-Kurven von erfindungsgemäßen ultraphoben Oberflächen der Beispiele 12-13

Figur 5 Darstellung der frequenzabhängigen Amplituden a(f) der Fourierkomponenten von erfindungsgemäßen Oberflächen der Beispiele 1-6

Figur 6 Darstellung der frequenzabhängigen Amplituden a(f) der Fourierkomponenten von erfindungsgemäßen Oberflächen der Beispiele 7-9

Figur 7 Darstellung der frequenzabhängigen Amplituden a(f) der Fourierkomponenten von erfindungsgemäßen

Oberflächen der Beispiele 1011

Figur 8 Darstellung der frequenzabhängigen Amplituden a(f) der Fourierkomponenten von erfindungsgemäßen Oberflächen der Beispiele 1213

Figur 9 Darstellung des Wasserrandwinkels als Funktion des Integrals der Funktion S(log f) = a(f)·f errechnet zwischen den Integrationsgrenzen log ($f_1$ / $\mu m^{-1}$) = -3 und log ($f_2$ / $\mu m^{-1}$) = 3 für die verschiedenen Beispieloberflächen 1-13

Figur 10 Frequenzabhängige Amplituden a(f) der Fourierkomponenten von erfindungsgemäßen Oberflächen der Beispiele 1-6 in der Form F(log f) in doppeltlogarithmischer Darstellung (entsprechend der Darstellung in der deutschen Anmeldung DE 19860136.0).

Figur 11 Darstellung des Wasserrandwinkels als Funktion des Integrals der Funktion F(log f) errechnet im Bereich positiver Werte von F im Intervall log ($f_1$ / $\mu m^{-1}$) = -3 und log ($f_2$ / $\mu m^{-1}$) = 3 für die verschiedenen Beispieloberflächen 1-6 (entsprechend der Darstellung in der deutschen Anmeldung DE 19860136.0).

## Beispiele

### Allgemeine Vorbemerkungen zu den Beispielen

### 1. Bestimmung der Oberflächentopographie

Zur Bestimmung der Oberflächentopographie wurde die Oberfläche mit einem Rastertunnelmikroskop, mit einem Rasterkraftmikroskop, mit Weißlichtinterferometrie und mit winkelaufgelöster Lichtstreuung analysiert.

Für die Rastertunnelmikroskopie wurde ein Nanoscope III, Digital Instruments, Santa Barbara, Kalifornien eingesetzt, das im Konstantstrom-Modus betrieben wurde. Die Messung wurde an Luft bei Raumtemperatur mit einer mechanisch gezogenen Platin-Iridium-Spitze durchgeführt. Als Scanfläche $L^2$ wurden nacheinander die Flächen 500x500$nm^2$, 200x200$nm^2$ und 50x50$nm^2$ mit jeweils $N^2$ = 512x512 Datenpunkten in Schrittweiten $\Delta L=N/L$ verwendet.

Die Höhenprofildaten werden gemäß den Gleichungen 1 und 2 der Veröffentlichung von C. Ruppe und A. Duparré, Thin Solid Films, 288, (1996), Seite 9 in die gemittelte spektrale Leistungsdichte PSD umgerechnet.

Die Rasterkraftmikroskopie wurde mit einem DIMENSION 3000 Rasterkraftmikroskop der Firma Digital Instruments, Santa Barbara, USA im Kontakt-Modus durchgeführt. Die Messung wird an Luft bei Raumtemperatur durchgeführt. Die Si Spitze hat einen Radius von ca. 10nm. Als Scanfläche $L^2$ werden nacheinander die Flächen 1x1$\mu m^2$, 10x10$\mu m^2$ und 50x50$\mu m^2$ mit jeweils $N^2$ = 512x512 Datenpunkten in Schrittweiten $\Delta L=N/L$ verwendet.

Für die Weißlichtinterferometrie wurde ein LEICA DMR Mikroskop der Firma Leica, Wetzlar verwendet. Die Meßfelder betrugen 140x140 $\mu m^2$, 280x2800 $\mu m^2$, 1120x1120 $\mu m^2$ und 2800x2800 $\mu m^2$ mit jeweils 512x512 Datenpunkten.

Die mit den oben genannten Messverfahren erhaltenen PSD($\Delta$f)-Kurven wurden dann zu einer einzigen PSD (f)-Kurve zusammengesetzt und doppeltlogarithmisch gemäß Fig. 1-4 aufgetragen, wobei die spektrale Leistungsdichte PSD mit $nm^4$ und die Ortsfrequenz f mit $\mu m^{-1}$ dimensionslos gemacht wurde.

### 2. Berechnung der frequenzabhängigen Amplituden a(f):

Die frequenzabhängigen Amplituden a(f) werden aus den PSD(f) Kurven gemäß folgender Formel bestimmt.

$$a(f) = \sqrt{4\pi \int_{f/\sqrt{D}}^{f\sqrt{D}} PSD(f')\,f'df'} \approx 2f\sqrt{\pi PSD(f)\log D}$$

Als Konstante D, die die Breite des Integrationsintervalls bestimmt und innerhalb dessen die Funktion PSD (f) als konstant betrachtet wird, wurde hier in allen Fällen der Wert D=1,5 verwendet.

Diese Formel entspricht prinzipiell der Berechnung von ortsfrequenzabhängigen Amplituden, die auch in J.C. Stover, Optical Scattering, 2nd Edition, SPIE Press Bellingham, Washington, USA 1995 in Formel (4.19) auf Seite 103, sowie in Tabelle 2.1 auf Seite 34 und Tabelle 2.2 auf Seite 37 beschrieben ist.

**Beispiel 1**

Ein walzpoliertes AlMg3-Blech mit einer Fläche von 35x35mm$^2$ und einer Dicke von 0,5mm wurde mit destilliertem Chloroform, anschließend 20s in wässriger NaOH (5g/l) bei 50°C entfettet.
Danach wurde 20s in $H_3PO_4$ (100g/l) vorgebeizt, 30s in dest. Wasser gespült und 90s in einer Mischung von HCl/$H_3BO_3$ (je 4g/l) bei 35°C und 120mA/cm$^2$ bei 35V Wechselspannung elektrochemisch gebeizt.
Nach 30s Spülung in dest. Wasser und 30s alkalischer Spülung in wässriger NaOH (5g/l) wurde erneut 30s in dest. Wasser gespült und anschließend 90s in $H_2SO_4$ (200g/l) bei 25°C mit 30mA/cm$^2$ bei 50V Gleichspannung anodisch oxidiert.

Danach wurde 30s in dest. Wasser, dann 60s bei 40°C in $NaHCO_3$ (20 g/l), dann wieder 30s in dest. Wasser gespült und 1 Stunde bei 80°C im Trockenschrank getrocknet.
Das so behandelte Blech wurde mit einer etwa 50nm dicken Goldschicht durch Zerstäubung beschichtet. Schließlich wurde die Probe 24 Stunden durch Tauchen in eine Lösung von n-Dekanthiol in Ethanol (1g/l) bei Raumtemperatur in einem geschlossenem Gefäß beschichtet, anschließend mit Ethanol gespült und getrocknet.

Die Oberfläche weist für Wasser einen statischen Randwinkel von 167° auf. Bei einer Neigung der Oberfläche um < 10° rollt ein Wassertropfen des Volumens 10µl ab.

Die Oberflächentopographie dieser Oberfläche wurde wie in "1. Bestimmung der Oberflächentopographie" beschrieben, analysiert und die erhaltenen Messdaten als Kurve 1 in Figur 1 aufgetragen.

Das Integral der normierten Fourier-Amplituden S(log f), errechnet zwischen Integrationsgrenzen log ($f_1$ / $\mu m^{-1}$) = -3 und log ($f_2$/ $\mu m^{-1}$) = 3, beträgt 0,81.

**Beispiel 2**

Bei diesem Beispiel wurde ein AlMg3-Blech genau wie bei Beispiel 1 behandelt und beschichtet, jedoch zusätzlich, vor der Goldbeschichtung 20s in 1M NaOH geätzt, anschließend 30s in dest. Wasser, dann in Ethanol gespült und 1 Stunde bei 80°C im Trockenschrank getrocknet.

Die Oberfläche weist für Wasser einen statischen Randwinkel von 161° auf. Bei einer Neigung der Oberfläche um < 10° rollt ein Wassertropfen des Volumens 10µl ab.

Die Oberflächentopographie dieser Oberfläche wurde wie in "1. Bestimmung der Oberflächentopographie" beschrieben, analysiert und die erhaltenen Messdaten als Kurve 2 in Figur 1 aufgetragen.

Das Integral der normierten Fourier-Amplituden S(log f), errechnet zwischen Integrationsgrenzen log ($f_1$ / $\mu m^{-1}$) = -3 und log ($f_2$/ $\mu m^{-1}$) = 3, beträgt 0,58.

**Vergleichsbeispiel 3**

Bei diesem Beispiel wurde ein AlMg3-Blech genau wie bei Beispiel 2 behandelt und beschichtet, jedoch 120s in 1M NaOH geätzt.

Die Oberfläche weist für Wasser einen statischen Randwinkel von 150° auf. Bei einer Neigung der Oberfläche um < 10° rollt ein Wassertropfen des Volumens 10µl nicht ab.

Die Oberflächentopographie dieser Oberfläche wurde wie in "1. Bestimmung der Oberflächentopographie" beschrieben, analysiert und die erhaltenen Messdaten als Kurve 3 in Figur 1 aufgetragen.

Das Integral der normierten Fourier-Amplituden S(log f), errechnet zwischen Integrationsgrenzen log ($f_1$ / $\mu m^{-1}$) = -3 und log ($f_2$ / $\mu m^{-1}$) = 3, beträgt 0,46.

**Vergleichsbeispiel 4**

In diesem Beispiel wurde ein Substrat aus Polycarbonat 35x35mm$^2$ und einer Dicke von 1mm mit einer 200nm dicken Aluminiumschicht zur Zerstäubung beschichtet. Anschließend wurde die Probe 30 Minuten in dest. Wasser bei 100°C behandelt, dann 30s in dest. Wasser bei Raumtemperatur gespült und 1 Stunde bei 80°C im Trockenschrank getrocknet.

Die so behandelte Probe wurde mit einer etwa 50nm dicken Goldschicht durch Zerstäubung beschichtet. Schließlich wurde die Probe 24 Stunden durch Tauchen in eine Lösung von n-Dekanthiol in Ethanol (1g/l) bei Raumtemperatur in einem geschlossenem Gefäß beschichtet, anschließend mit Ethanol gespült und getrocknet.

Die Oberfläche weist für Wasser einen statischen Randwinkel von 135° auf. Bei einer Neigung der Oberfläche um < 10° rollt ein Wassertropfen des Volumens 10µl nicht ab.

Die Oberflächentopographie dieser Oberfläche wurde wie in "1. Bestimmung der Oberflächentopographie" beschrieben, analysiert und die erhaltenen Messdaten als Kurve 4 in Figur 1 aufgetragen.

Das Integral der normierten Fourier-Amplituden S(log f), errechnet zwischen Integrationsgrenzen log ($f_1$ /

$\mu m^{-1}$) = -3 und log ($f_2$ / $\mu m^{-1}$) = 3, beträgt 0,28.

**Vergleichsbeispiel 5**

In diesem Beispiel wurde ein walzpoliertes AlMg3-Blech mit einer Fläche von 35x35mm$^2$ und einer Dicke von 0,5mm mit destilliertem Chloroform entfettet. Nach 30s Spülung in dest. Wasser wurde anschließend 600s in $H_2SO_4$ (200g/l) bei 20°C mit 10mA/cm$^2$ bei 35V Gleichspannung anodisch oxidiert. Danach wurde in dest. Wasser gespült und 1 Stunde bei 80°C im Trockenschrank getrocknet.

Das so behandelte Blech wurde mit einer etwa 50nm dicken Goldschicht durch Zerstäubung beschichtet. Schließlich wurde die Probe 24 Stunden durch Tauchen in eine Lösung von n-Dekanthiol in Ethanol (1g/l) bei Raumtemperatur in einem geschlossenem Gefäß beschichtet, anschließend mit Ethanol gespült und getrocknet.

Die Oberfläche weist für Wasser einen statischen Randwinkel von 122° auf. Bei einer Neigung der Oberfläche um < 10° rollt ein Wassertropfen des Volumens 10µl nicht ab.

Die Oberflächentopographie dieser Oberfläche wurde wie in "1. Bestimmung der Oberflächentopographie" beschrieben, analysiert und die erhaltenen Messdaten als Kurve 5 in Figur 1 aufgetragen.

Das Integral der normierten Fourier-Amplituden S(log f), errechnet zwischen Integrationsgrenzen log ($f_1$ / $\mu m^{-1}$) = -3 und log ($f_2$ / $\mu m^{-1}$) = 3, beträgt 0,14.

**Vergleichsbeispiel 6**

Es wurde ein unbehandelter polierter einkristalliner Si-Wafer mit 200nm Gold bedampft und die Probe 24 Stunden durch Tauchen in eine Lösung von n-Dekanthiol in Ethanol (1g/l) bei Raumtemperatur in einem geschlossenem Gefäß beschichtet, anschließend mit Ethanol gespült und getrocknet.

Die Oberfläche weist für Wasser einen statischen Randwinkel von 115° auf. Bei einer Neigung der Oberfläche um < 10° rollt ein Wassertropfen des Volumens 10µl nicht ab.

Die Oberflächentopographie dieser Oberfläche wurde wie in "1. Bestimmung der Oberflächentopographie" beschrieben, analysiert und die erhaltenen Messdaten als Kurve 6 in Figur 1 aufgetragen.

Das Integral der normierten Fourier-Amplituden S(log f), errechnet zwischen Integrationsgrenzen log ($f_1$ / $\mu m^{-1}$) = -3 und log ($f_2$ / $\mu m^{-1}$) = 3, beträgt 0,04.

**Vergleichsbeispiel 7**

In diesem Beispiel wurde ein Substrat aus Polycarbonat 35x35mm$^2$ und einer Dicke von 1mm mit einer 100nm dicken Aluminiumschicht zur Zerstäubung beschichtet. Anschließend wurde die Probe 3 Minuten in dest. Wasser bei 100°C behandelt, dann 30s in dest. Wasser bei Raumtemperatur gespült und 1 Stunde bei 80°C im Trockenschrank getrocknet.

Die so behandelte Probe wurde mit einer etwa 100nm dicken Goldschicht durch Zerstäubung beschichtet. Schließlich wurde die Probe 24 Stunden durch Tauchen in eine Lösung von n-Dekanthiol in Ethanol (1g/l) bei Raumtemperatur in einem geschlossenem Gefäß beschichtet, anschließend mit Ethanol gespült und getrocknet.

Die Oberfläche weist für Wasser einen statischen Randwinkel von 147° auf. Bei einer Neigung der Oberfläche um < 10° rollt ein Wassertropfen des Volumens 10µl nicht ab.

Die Oberflächentopographie dieser Oberfläche wurde wie in "1. Bestimmung der Oberflächentopographie" beschrieben, analysiert und die erhaltenen Messdaten als Kurve 1 in Figur 2 aufgetragen.

Das Integral der normierten Fourier-Amplituden S(log f), errechnet zwischen Integrationsgrenzen log ($f_1$ / $\mu m^{-1}$) = -3 und log ($f_2$ / $\mu m^{-1}$) = 3, beträgt 0,39.

**Beispiel 8**

In diesem Beispiel wurde eine Probe genau wie in Beispiel 7 hergestellt. Als Goldschicht wurde jedoch im Unterschied zu Beispiel 7 eine Dicke von 50 nm verwendet.

Die Oberfläche weist für Wasser einen statischen Randwinkel von 154° auf. Bei einer Neigung der Oberfläche um < 10° rollt ein Wassertropfen des Volumens 10µl ab.

Die Oberflächentopographie dieser Oberfläche wurde wie in "1. Bestimmung der Oberflächentopographie" beschrieben, analysiert und die erhaltenen Messdaten als Kurve 2 in Figur 2 aufgetragen.

Das Integral der normierten Fourier-Amplituden S(log f), errechnet zwischen Integrationsgrenzen log ($f_1$ / $\mu m^{-1}$) = -3 und log ($f_2$ / $\mu m^{-1}$) = 3, beträgt 0,53.

**Vergleichsbeispiel 9**

In diesem Beispiel wurde ein walzpoliertes AlMg3-Blech mit einer Fläche von $35x35mm^2$ und einer Dicke von 0,5mm mit destilliertem Chloroform entfettet. Anschließend wurde die Probe 20s in dest. Wasser bei 100°C behandelt. Danach wurde in Ethanol gespült und 1 Stunde bei 80°C im Trockenschrank getrocknet.

Das so behandelte Blech wurde mit einer etwa 50nm dicken Goldschicht durch Zerstäubung beschichtet. Schließlich wurde die Probe 24 Stunden durch Tauchen in eine Lösung von n-Dekanthiol in Ethanol (1g/l) bei Raumtemperatur in einem geschlossenem Gefäß beschichtet, anschließend mit Ethanol gespült und getrocknet.

Die Oberfläche weist für Wasser einen statischen Randwinkel von 130° auf. Bei einer Neigung der Oberfläche um < 10° rollt ein Wassertropfen des Volumens 10µl nicht ab.

Die Oberflächentopographie dieser Oberfläche wurde wie in "1. Bestimmung der Oberflächentopographie" beschrieben, analysiert und die erhaltenen Messdaten als Kurve 3 in Figur 2 aufgetragen.

Das Integral der normierten Fourier-Amplituden S(log f), errechnet zwischen Integrationsgrenzen $\log (f_1 / \mu m^{-1}) = -3$ und $\log (f_2 / \mu m^{-1}) = 3$, beträgt 0,15.

**Vergleichsbeispiel 10**

In diesem Beispiel wurde ein polierter einkristalliner Si(100) Wafer durch Elektronenstrahlverdampfung bei einer Substrattemperatur von 520K mit der Schichtfolge Substrat-HLHL bedampft ($H=LaF_3$, $L=MgF_2$). Als Einzelschichtdicken wurden für H eine Dicke von 100nm, für L eine Dicke von 116nm verwendet. Die Präparation entspricht der Veröffentlichung von S. Jakobs, A. Duparré und H. Truckenbrodt, Applied Optics 37, 1180 (1998).

Die so behandelte Probe wurde mit einer etwa 50nm dicken Goldschicht durch Zerstäubung beschichtet. Schließlich wurde die Probe 24 Stunden durch Tauchen in eine Lösung von n-Dekanthiol in Ethanol (1g/l) bei Raumtemperatur in einem geschlossenem Gefäß beschichtet, anschließend mit Ethanol gespült und getrocknet.

Die Oberfläche weist für Wasser einen statischen Randwinkel von 120° auf. Bei einer Neigung der Oberfläche um < 10° rollt ein Wassertropfen des Volumens 10µl nicht ab.

Die Oberflächentopographie dieser Oberfläche wurde wie in "1. Bestimmung der Oberflächentopographie" beschrieben, analysiert und die erhaltenen Messdaten als Kurve 10 in Figur 3 aufgetragen.

Das Integral der normierten Fourier-Amplituden S(log f), errechnet zwischen Integrationsgrenzen $\log (f_1 / \mu m^{-1}) = -3$ und $\log (f_2 / \mu m^{-1}) = 3$, beträgt 0,10.

**Vergleichsbeispiel 11**

In diesem Beispiel wurde eine Probe wie im Beispiel 10 hergestellt. Die Schichtfolge beträgt hier anstelle Substrat-$(HL)^2$ jedoch: Substrat-$(HL)^8$.

Die Oberfläche weist für Wasser einen statischen Randwinkel von 130° auf. Bei einer Neigung der Oberfläche um < 10° rollt ein Wassertropfen des Volumens 10µl nicht ab.

Die Oberflächentopographie dieser Oberfläche wurde wie in "1. Bestimmung der Oberflächentopographie" beschrieben, analysiert und die erhaltenen Messdaten als Kurve 11 in Figur 3 aufgetragen.

Das Integral der normierten Fourier-Amplituden S(log f), errechnet zwischen Integrationsgrenzen $\log (f_1/\mu m^{-1}) = -3$ und $\log (f_2/\mu m^{-1}) = 3$, beträgt 0,23.

**Beispiel 12**

In diesem Beispiel wurde eine Probe in der gleichen Weise wie in der unveröffentlichten deutschen Patentanmeldung mit dem Aktenzeichen 19935326.3 beschrieben hergestellt. *Cyclo*-$\{SiO(CH_3)[(CH_2)_2Si(OH)(CH_3)_2]\}_4$ (nachfolgend: D4-Silanol), wurde wie in DE 196 03 241 beschrieben, hergestellt.

4,1 g AEROSIL® R 812 (Degussa) werden in 28,5 g 1-Methoxy2-propanol, 5,0 g D4-Silanol und 6,5 g Tetraethoxysilan dispergiert. Dazu werden 1,1g 0,1N p-Toluolsulfonsäure zugegeben und die Mischung eine Stunde bei Raumtemperatur (23°C) gerührt. Danach wird die erhaltene Lacklösung auf Glas mit einem Filmziehrahmen von 120 µm Nassfilmdicke appliziert. Nach Abdampfen der flüchtigen Bestandteile bei Raumtemperatur wurde die Beschichtung im einem Umlufttrockenschrank bei 130 °C eine Stunde im Umlufttrockenschrank gehärtet.

Die so behandelte Probe wurde mit einer etwa 50nm dicken Goldschicht durch Zerstäubung beschichtet. Schließlich wurde die Probe 24 Stunden durch Tauchen in eine Lösung von n-Dekanthiol in Ethanol (1g/l) bei Raumtemperatur in einem geschlossenem Gefäß beschichtet, anschließend mit Ethanol gespült und getrocknet.

Die Oberfläche weist für Wasser einen statischen Randwinkel von 165° auf. Bei einer Neigung der Oberfläche um < 10° rollt ein Wassertropfen des Volumens 10µl ab.

Die Oberflächentopographie dieser Oberfläche wurde wie in "1. Bestimmung der Oberflächentopographie"

beschrieben, analysiert und die erhaltenen Messdaten als Kurve 12 in Figur 4 aufgetragen.

Das Integral der normierten Fourier-Amplituden S(log f), errechnet zwischen Integrationsgrenzen log ($f_1$ / $\mu m^{-1}$) = -3 und log ($f_2$ / $\mu m^{-1}$) = 3, beträgt 0,71.

## Beispiel 13

In diesem Beispiel wurde eine Probe wie in Beispiel 12 hergestellt, wobei anstelle der Zugabe von 1,1g p-Toluolsulfonsäure hier 2,3g HCl hinzugegeben wurden.

Die Oberfläche weist für Wasser einen statischen Randwinkel von 157° auf. Bei einer Neigung der Oberfläche um < 10° rollt ein Wassertropfen des Volumens 10µl ab.

Die Oberflächentopographie dieser Oberfläche wurde wie in "1. Bestimmung der Oberflächentopographie" beschrieben, analysiert und die erhaltenen Messdaten als Kurve 13 in Figur 4 aufgetragen.

Das Integral der normierten Fourier-Amplituden S(log f), errechnet zwischen Integrationsgrenzen log ($f_1$ / $\mu m^{-1}$) = -3 und log ($f_2$ / $\mu m^{-1}$) = 3, beträgt 0.60.

## Beispiel 14

**Negativabformung:**

In diesem Beispiel wird mit Hilfe einer Polymerlösung ein Negativabdruck einer ultraphoben Oberfläche hergestellt. Als Form wird die Oberfläche verwendet, die in Beispiel 1 erhalten wurde.

Auf diese Formoberfläche wurde ein ca. 20 µm dicker Film Poly(methylmethacrylat - co - perfluorooctadecylmethacrylat) ($-[CH_2-C(COOCH_3)CH_3]_n-$ co $-[CH_2-C(COOC_{18}F_{37})CH_3]_m-$, wobei das Verhältnis n/m = 10 ist; 50 Gew.-%ige Lösung in Butanon) mit Hilfe eines Filmziehrahmens gegossen, wobei 30% des Polymers in Methylenchlorid gelöst war. Nach dem Abtrocknen bei Raumtemperatur wurde aus dem Film ein 10 mm breiter Streifen mit einem Skalpell freigeschnitten, von der Oberseite mit einem Tesafilm verstärkt und von der Form abgezogen.

Die Unterseite, die die Kontaktseite zu der Form war, wurde mit einer etwa 50nm dicken Goldschicht durch Zerstäubung beschichtet. Schließlich wurde die Probe 24 Stunden durch Bedampfung mit n-Dekanthiol-Dampf bei Raumtemperatur in einem geschlossenem Gefäß beschichtet, anschließend mit Ethanol gespült und getrocknet.

Die Oberfläche weist für Wasser einen statischen Randwinkel von 165° auf. Bei einer Neigung der Oberfläche um < 10° rollt ein Wassertropfen des Volumens 10µl ab.

## Beispiel 15

**Positivabformung:**

In diesem Beispiel wird mit Hilfe einer Polymerlösung ein Positivabdruck einer ultraphoben Oberfläche hergestellt. Als Form wird die Oberfläche verwendet, die in Beispiel 1 erhalten wurde.

**Schritt 1: Herstellung eines Negativabdrucks der ultraphoben Formoberfläche**

Auf die Formoberfläche Wurde ein ca. 100µm dicker Film aus Bisphenol-A-Polycarbonat ($M_n$ = 10000) aus einer 50Gew%igen Lösung in Methylenchlorid mit Hilfe eines Filmziehrahmens gegossen. Nach dem Abtrocknen bei Raumtemperatur wurde aus dem Film ein 20mm breiter Streifen mit einem Skalpell freigeschnitten, von der Oberseite mit einem Tesafilm verstärkt und von der Form abgezogen.

Auf die (ursprünglich zur Form gewandten) Unterseite des Films wurde eine etwa 50 nm dicke Goldschicht durch Zerstäubung beschichtet. Anschließend wurde die Goldschicht der Probe 24 Stunden mit einigen Tropfen einer Lösung von n-Perfluoroktanthiol in α,α,α-Trifluortoluol (1 g/l) bei Raumtemperatur in einem geschlossenem Gefäß beschichtet, dann mit α,α,α-Trifluortoluol gespült und getrocknet.

**Schritt 2: Abformen des Negativ-Abdrucks der Originaloberfläche mit einer Polymermischung, die ein oleophobes Polymer als Additiv enthält**

Auf diese Formoberfläche wurde ein ca. 20 µm dicker Film aus Polystyrol ($M_n$=15000) mit ca. 10 Gew.-% Poly(methylmethacrylat - co - perfluoroctadecylmethacrylat) ($-[CH_2-C(COOCH_3)CH_3]_n-$ co $-[CH_2-C(COOC_{18}F_{37})CH_3]_m-$; n/m = 10) mit Hilfe eines Gießrahmens gegossen, wobei 30% der Polymermischung in Methylenchlorid gelöst war. Nach dem langsamen Abtrocknen bei Raumtemperatur (ca. 10h) wurde aus dem Film ein 10 mm breiter Streifen mit einem Skalpell freigeschnitten, von der Oberseite mit einem Tesafilm verstärkt und von der Form abgezogen.

Die Unterseite, die die Kontaktseite zu der Form war, wurde mit einer etwa 50nm dicken Goldschicht durch Zerstäubung beschichtet. Schließlich wurde die Probe 24 Stunden durch Bedampfung mit n-Dekanthiol-Dampf bei Raumtemperatur in einem geschlossenem Gefäß beschichtet, anschließend mit Ethanol gespült und getrocknet.

Die Oberfläche weist für Wasser einen statischen Randwinkel von 164° auf. Bei einer Neigung der Oberfläche um < 10° rollt ein Wassertropfen des Volumens 10µl ab.

In **Tabelle 1** sind die Ergebnisse der erfindungsgemäßen Beispiele und der Vergleichsbeispiele noch einmal zusammengefasst.

Es zeigt sich deutlich, dass nur bei ultraphoben Oberflächen, bei denen der Kontaktwinkel eines Wassertropfens, der auf der Oberfläche liegt > 150° ist, das Integral der Kurve $a(f) \cdot f = S(\log f)$ errechnet zwischen Integrationsgrenzen $\log(f_1/\mu m^{-1}) = -3$ und $\log(f_2/\mu m^{-1}) = 3$, größer oder gleich 0,5 beträgt.

Ein positiver oder negative Abdruck einer solchen ultraphoben Oberfläche liefert ebenfalls einen Randwinkel > 150°.

Tabelle 1

| | **Randwinkel** | **Integral** |
|---|---|---|
| Beispiel 1 | 167° | 0,81 |
| Beispiel 2 | 161° | 0,58 |
| Vergleichsbeispiel 3 | 150° | 0,46 |
| Vergleichsbeispiel 4 | 135° | 0,28 |
| Vergleichsbeispiel 5 | 122° | 0,14 |
| Vergleichsbeispiel 6 | 115° | 0,04 |
| Vergleichsbeispiel 7 | 147° | 0,39 |
| Beispiel 8 | 154° | 0,53 |
| Vergleichsbeispiel 9 | 130° | 0,15 |
| Vergleichsbeispiel 10 | 120° | 0,10 |
| Vergleichsbeispiel 11 | 130° | 0,23 |
| Beispiel 12 | 165° | 0,71 |
| Beispiel 13 | 157° | 0,60 |
| Beispiel 14 | 165° | nicht bestimmt |
| Beispiel 15 | 164° | nicht bestimmt |

## Patentansprüche

1. Strukturierte Oberfläche mit ultraphoben Eigenschaften, **dadurch gekennzeichnet, dass** sie eine Oberflächentopographie aufweist, bei der der Wert des Integrals einer Funktion S

$$S(\log f) = a(f) \cdot f \qquad (1),$$

die einen Zusammenhang zwischen den Ortsfrequenzen f der einzelnen Fourierkomponenten und deren Amplituden a(f) gibt, zwischen den Integrationsgrenzen $\log(f_1 / \mu m^{-1}) = -3$ und $\log(f_2 / \mu m^{-1}) = 3$, mindestens 0,5 beträgt und aus einem hydrophoben oder insbesondere oleophoben Material besteht oder mit einem hydrophoben oder insbesondere oleophoben Material beschichtet ist.

2. Oberfläche nach Anspruch 1, **dadurch gekennzeichnet, daß** das Integral > 0,6 beträgt.

3. Ultraphobe Oberfläche gemäß Anspruch 1 oder 2, **dadurch gekennzeichnet, daß** sie einen Kontaktwinkel von mindestens 150° und einen Abrollwinkel von < 10° aufweist.

4. Ultraphobe Oberfläche gemäß einem der Ansprüche 1 bis 3, **dadurch gekennzeichnet, daß** sie einen Kontaktwinkel von mindestens 155° aufweist.

**5.** Ultraphobe Oberfläche gemäß einem der Ansprüche 1 bis 4, **dadurch gekennzeichnet, daß** sie aus Metall oder Kunststoff besteht.

**6.** Ultraphobe Oberfläche gemäß Anspruch 5, **dadurch gekennzeichnet, daß** das Metall aus der Reihe Beryllium, Magnesium, Scandium, Titan, Vanadium, Chrom, Mangan, Eisen, Kobalt, Nickel, Kupfer, Zink, Aluminium, Gallium, Yttrium, Zirkonium, Niob, Molybdän, Technetium, Ruthenium, Rhenium, Palladium, Silber, Cadmium, Indium, Zinn, Lanthan, Cer, Praseodym, Neodym, Samarium, Europium, Gadolinium, Terbium, Dysprosium, Holmium, Erbium, Thulium, Ytterbium, Lutetium, Hafnium, Tantal, Wolfram, Rhenium, Osmium, Iridium, Platin, Gold, Thallium, Blei, Wismut, insbesondere Titan, Aluminium, Magnesium und Nickel oder einer Legierung der genannten Metalle ausgewählt ist.

**7.** Ultraphobe Oberfläche gemäß Anspruch 5, **dadurch gekennzeichnet, daß** das Metall eine Aluminium - Magnesium Legierung, insbesondere $AlMg_3$ ist.

**8.** Ultraphobe Oberfläche gemäß Anspruch 5, **dadurch gekennzeichnet, daß** der Kunststoff ein duroplastischer oder thermoplastischer Kunststoff ist.

**9.** Ultraphobe Oberfläche gemäß Anspruch 8, **dadurch gekennzeichnet, daß** der duroplastische Kunststoff aus der Reihe: Diallylphthalat-Harz, Epoxid-Harz, Harnstoff-Formaldehyd-Harz, Melamin-Formaldehyd-Harz, Melamin-Phenol-Formaldehyd-Harz, Phenol-Formaldehyd-Harz, Polyimid, Silikonkautschuk und ungesättigtes Polyesterharz und der thermoplastische Kunststoff aus der Reihe: thermoplastisches Polyolefin (z. B. Polypropylen oder Polyethylen), Polycarbonat, Polyestercarbonat, Polyester (z.B. PBT oder PET), Polystyrol, Styrolcopolymerisat, SAN-Harz, kautschukhaltiges Styrol-Pfropf-Copolymerisat (z.B. ABS-Polymerisat), Polyamid, Polyurethan, Polyphenylensulfid, Polyvinylchlorid oder beliebigen möglichen Mischungen der genannten Polymere ausgewählt ist.

**10.** Ultraphobe Oberfläche gemäß einem der Ansprüche 1 bis 9, **dadurch gekennzeichnet, daß** die Oberfläche eine Beschichtung mit einem hydrophoben Phobierungshilfsstoff, insbesondere einer anionischen, kationischen, amphoteren oder nichtionischen, grenzflächenaktiven Verbindung aufweist.

**11.** Werkstoff oder Baustoff aufweisend eine ultraphobe Oberfläche gemäß einem der Ansprüche 1 bis 10.

**12.** Verwendung der ultraphoben Oberfläche gemäß einem der Ansprüche 1 bis 10 zur reibungsvermindernden Auskleidung von Fahrzeugkarosserien, Flugzeug- oder Schiffsrümpfen.

**13.** Verwendung der ultraphoben Oberfläche gemäß einem der Ansprüche 1 bis 10 als selbstreinigende Beschichtung oder Beplankung von Bauten, Dächern, Fenstern, keramischem Baumaterial, z.B. für Sanitäranlagen, Haushaltsgeräten.

**14.** Verwendung der ultraphoben Oberfläche gemäß einem der Ansprüche 1 bis 10 als rostschützende Beschichtung von Metallgegenständen.

**15.** Verwendung der ultraphoben Oberfläche gemäß einem der Ansprüche 1 bis 10 als transparente Scheibe oder als Deckschicht von transparenten Scheiben, insbesondere Glas- oder Kunststoffscheiben, insbesondere für Solarzellen, Fahrzeuge oder Gewächshäuser.

**16.** Verfahren zur Herstellung einer Oberfläche mit ultraphoben Eigenschaften gemäß einem der Ansprüche 1 bis 10, auf Basis einer $AlMg_3$ Legierung, **dadurch gekennzeichnet, dass** die Oberfläche gereinigt, gebeizt, anodisch oxidiert, in kochendem Wasser passiviert, ggf. mit einem Edelmetall als Haftvermittler, insbesondere mit Gold einer Schichtdicke von 10 bis 100nm, insbesondere durch Zerstäubung beschichtet wird und mit einem hydrophoben Material, insbesondere mit einer anionischen, kationischen, amphoteren oder nichtionischen, grenzflächenaktiven Verbindung als Phobierungshilfsstoff beschichtet wird.

**17.** Verfahren zur Herstellung einer Oberfläche mit ultraphoben Eigenschaften durch Abformen, **dadurch gekennzeichnet, dass** eine Form, die das Negativ einer für eine ultraphobe Oberfläche geeigneten Oberflächentopographie aufweist, mit einer Mischung aus einem Kunststoff und einem hydrophoben oder insbesondere oleophoben Additiv, das sich beim Aushärten als dünner Film zwischen der Formoberfläche und dem Kunststoffformkörper

abscheidet, abgeformt wird.

**18.** Verfahren zur Herstellung einer Oberfläche mit ultraphoben Eigenschaften durch Abformen, **dadurch gekennzeichnet, dass** die Oberfläche von einer positiven Form, die eine für eine ultraphobe Oberfläche geeignete Oberflächenstruktur aufweist, mit einem Kunststoff, insbesondere einem duroplastischen oder thermoplastischen Polymer abgeformt und die Oberfläche des so erhaltenen Formkörpers mit dem Negativabdruck der Oberfläche der positiven Form gegebenenfalls mit einer Haftvermittlerschicht und anschließend mit einer hydrophoben oder insbesondere oleophoben Beschichtung versehen wird.

**19.** Verfahren gemäß Anspruch 18, **dadurch gekennzeichnet, dass** als Polymer ein hydrophobes Polymer eingesetzt wird, bevorzugt Poly(methylmethacrylat-coperfluoroctadecylmethacrylat) und ggf. die zusätzliche Beschichtung mit hydrophoben oder oleophoben Material weggelassen wird.

**20.** Verfahren gemäß Anspruch 17 oder 18, **dadurch gekennzeichnet, dass** als Form das Negativ bzw. Positiv der Oberflächenstruktur einer gebeizten, eloxierten und mit Heißwasser von 50 bis 100°C behandelten und im wesentlichen Aluminium oder eine Aluminiumlegierung enthaltenden Oberfläche verwendet wird.

**21.** Verfahren gemäß Anspruch 17 oder 18, **dadurch gekennzeichnet, dass** als Form das Negativ bzw. Positiv der Oberflächenstruktur einer mikrostrukturierten, eloxierten, kalzinierten und im wesentlichen Aluminium oder eine Aluminiumlegierung enthaltenden Oberfläche verwendet wird.

**22.** Verfahren gemäß einem der Ansprüche 17 bis 21, **dadurch gekennzeichnet, dass** als Kunststoff ein duroplastischer Kunststoff oder ein thermoplastischer Kunststoff zum Abformen verwendet wird.

**23.** Verfahren gemäß Anspruch 22, **dadurch gekennzeichnet, dass** der duroplastische Kunststoff aus der Reihe: Diallylphthalat-Harz, Epoxid-Harz, Harnstoff-Formaldehyd-Harz, Melamin-Formaldehyd-Harz, Melamin-Phenol-Formaldehyd-Harz, Phenol-Formaldehyd-Harz, Polyimid, Silikonkautschuk und ungesättigtes Polyesterharz ausgewählt ist.

**24.** Verfahren gemäß Anspruch 22, **dadurch gekennzeichnet, dass** der thermoplastische Kunststoff aus der Reihe: thermoplastisches Polyolefin, z. B. Polypropylen oder Polyethylen, Polycarbonat, Polyestercarbonat, Polyester (z. B. PBT oder PET), Polystyrol, Styrolcopolymerisat, SAN-Harz, kautschukhaltiges Styrol-Pfropf-Copolymerisat, z. B. ABS-Polymerisat, Polyamid, Polyurethan, Polyphenylensulfid, Polyvinylchlorid oder beliebigen möglichen Mischungen der genannten Polymere ausgewählt ist.

**25.** Verfahren gemäß einem der Ansprüche 17 bis 24, **dadurch gekennzeichnet, dass** die Oberfläche des Formkörpers mit dem Abdruck eine Beschichtung mit einem hydrophoben Phobierungshilfsstoff, insbesondere einer anionischen, kationischen, amphoteren oder nichtionischen, grenzflächenaktiven Verbindung aufweist, oder ein solcher Phobierungshilfsstoff als Additiv zu damit verträglichen Polymeren eingesetzt ist, der die Oberfläche hydrophobiert.

**26.** Verfahren zur Prüfung von Oberflächen auf ultraphobe Eigenschaften, **dadurch gekennzeichnet, dass** die Oberfläche mit einem Edelmetall oder GaAs als Haftvermittler, insbesondere mit Gold, insbesondere einer Schichtdicke von 10 bis 100nm beschichtet, insbesondere bedampft wird, mit einem Phobierungshilfsstoff, bevorzugt mit Dekanthiol beschichtet wird, anschließend die Oberflächentopographie, insbesondere mittels einer Kombination von Rastertunnelmikroskopie, Rasterkraftmikroskopie, Weißlichtinterferometrie analysiert wird und aus den gemessenen Daten die Ortsfrequenzen f sowie deren Strukturamplituden a(f), sowie das Integral der Funktion S

$$S(\log f) = a(f) \cdot f \qquad (1)$$

errechnet zwischen den Integrationsgrenzen $\log (f_1/\mu m^{-1}) = -3$ und $\log (f_2/\mu m^{-1}) = 3$ gebildet wird.

## Claims

**1.** A structured surface with ultraphobic properties, **characterised in that** it has a surface topography in which the value of the integral of a function S

$$S(\log f) = a(f) \cdot f \qquad (1),$$

which indicates a relationship between the spatial frequencies f of the individual Fourier components and the amplitudes a(f) thereof, is at least 0.5 between the integration limits $\log(f_1/\mu m^{-1}) = -3$ and $\log(f_2/\mu m^{-1}) = 3$, and consists of a hydrophobic or in particular oleophobic material or is coated with a hydrophobic or in particular oleophobic material.

**2.** A surface according to claim 1, **characterised in that** the integral is >0.6.

**3.** An ultraphobic surface according to claim 1 or 2, **characterised in that** it exhibits a contact angle of at least 150° and a roll-off angle of <10°.

**4.** An ultraphobic surface according to one of claims 1 to 3, **characterised in that** it exhibits a contact angle of at least 155°.

**5.** An ultraphobic surface according to one of claims 1 to 4, **characterised in that** it consists of metal or plastic.

**6.** An ultraphobic surface according to claim 5, **characterised in that** the metal is selected from the series beryllium, magnesium, scandium, titanium, vanadium, chromium, manganese, iron, cobalt, nickel, copper, zinc, aluminium, gallium, yttrium, zirconium, niobium, molybdenum, technetium, ruthenium, rhenium, palladium, silver, cadmium, indium, tin, lanthanum, cerium, praseodymium, neodymium, samarium, europium, gadolinium, terbium, dysprosium, holmium, erbium, thulium, ytterbium, lutetium, hafnium, tantalum, tungsten, rhenium, osmium, iridium, platinum, gold, thallium, lead, bismuth, in particular titanium, aluminium, magnesium and nickel or an alloy of the stated metals.

**7.** An ultraphobic surface according to claim 5, **characterised in that** the metal is an aluminium/magnesium alloy, in particular $AlMg_3$.

**8.** An ultraphobic surface according to claim 5, **characterised in that** the plastic is a thermosetting or thermoplastic plastic.

**9.** An ultraphobic surface according to claim 8, **characterised in that** the thermosetting plastic is selected from the series: diallyl phthalate resin, epoxy resin, urea/formaldehyde resin, melamine/formaldehyde resin, melamine/phenol/formaldehyde resin, phenol/formaldehyde resin, polyimide, silicone rubber and unsaturated polyester resin and the thermoplastic plastic is selected from the series: thermoplastic polyolefin (e.g. polypropylene or polyethylene), polycarbonate, polyester carbonate, polyester (e.g. PBT or PET), polystyrene, styrene copolymer, SAN resin, rubber-containing styrene graft copolymer (e.g. ABS polymer), polyamide, polyurethane, polyphenylene sulphide, polyvinyl chloride or any desired possible mixtures of the stated polymers.

**10.** An ultraphobic surface according to one of claims 1 to 9, **characterised in that** the surface comprises a coating with a hydrophobic phobing auxiliary, in particular an anionic, cationic, amphoteric or nonionic, surface-active compound.

**11.** A material or building material comprising an ultraphobic surface according to one of claims 1 to 10.

**12.** Use of the ultraphobic surface according to one of claims 1 to 10 to provide a friction-reducing facing for vehicle bodies, aircraft bodies or hulls of ships.

**13.** Use of the ultraphobic surface according to one of claims 1 to 10 as a self-cleaning coating or skin on buildings, roofs, windows and ceramic building materials, e.g. for sanitary installations, household appliances.

**14.** Use of the ultraphobic surface according to one of claims 1 to 10 as an antirust coating for metallic articles.

**15.** Use of the ultraphobic surface according to one of claims 1 to 10 as a transparent sheet or as an outer layer for transparent sheets, in particular glass or plastic sheets, in particular for solar cells, vehicles or greenhouses.

**16.** A method for the production of a surface with ultraphobic properties according to one of claims 1 to 10 based on

an $AlMg_3$ alloy, **characterised in that** the surface is cleaned, pickled, anodically oxidised, passivated in boiling water, optionally coated, in particular by atomisation, with a noble metal as coupling agent, in particular with gold of a layer thickness of 10 to 100 nm and is coated with a hydrophobic material, in particular with an anionic, cationic, amphoteric or nonionic, surface-active compound as phobing auxiliary.

**17.** A method for the production of a surface with ultraphobic properties by replica moulding, **characterised in that** a mould, which exhibits the negative of a surface topography suitable for an ultraphobic surface, is replica moulded with a mixture of a plastic and a hydrophobic or in particular oleophobic additive which, on curing, is deposited as a thin film between the mould surface and the plastics moulding.

**18.** A method for the production of a surface with ultraphobic properties by replica moulding, **characterised in that** the surface of a positive mould, which exhibits the surface structure suitable for an ultraphobic surface, is replica moulded with a plastic, in particular a thermosetting or thermoplastic polymer, and the surface of the resultant moulding is provided with the negative impression of the surface of the positive mould, optionally with a coupling agent layer and then with a hydrophobic or in particular oleophobic coating.

**19.** A method according to claim 18, **characterised in that** that a hydrophobic polymer is used as the polymer, preferably poly(methyl methacrylate-coperfluorooctadecyl methacrylate) and the additional coating with hydrophobic or oleophobic material is optionally omitted.

**20.** A method according to claim 17 or 18, **characterised in that** the mould used is the negative or positive of the surface structure of a surface which is substantially aluminium or contains an aluminium alloy and has been pickled, electrically oxidised and treated with hot water at 50 to 100°C.

**21.** A method according to claim 17 or 18, **characterised in that** the mould used is the negative or positive of the surface structure of a surface which is substantially aluminium or contains an aluminium alloy and has been microstructured, electrically oxidised and calcined.

**22.** A method according to one of claims 17 to 21, **characterised in that** the plastic used is a thermosetting plastic or a thermoplastic plastic for replica moulding.

**23.** A method according to claim 22, **characterised in that** the thermosetting plastic is selected from the series: diallyl phthalate resin, epoxy resin, urea/formaldehyde resin, melamine/formaldehyde resin, melamine/phenol/formaldehyde resin, phenol/formaldehyde resin, polyimide, silicone rubber and unsaturated polyester resin.

**24.** A method according to claim 22, **characterised in that** the thermoplastic plastic is selected from the series: thermoplastic polyolefin, e.g. polypropylene or polyethylene, polycarbonate, polyester carbonate, polyester (e.g. PBT or PET), polystyrene, styrene copolymer, SAN resin, rubber-containing styrene graft copolymer, e.g. ABS polymer, polyamide, polyurethane, polyphenylene sulphide, polyvinyl chloride or any desired possible mixtures of the stated polymers.

**25.** A method according to one of claims 17 to 24, **characterised in that** the surface of the moulding with the impression comprises a coating with a hydrophobic phobing auxiliary, in particular an anionic, cationic, amphoteric or nonionic surface-active compound, or such a phobing auxiliary, which hydrophobes the surface, is added as an additive to polymers compatible therewith.

**26.** A method for testing surfaces for ultraphobic properties, **characterised in that** the surface is coated, in particular vapour-deposited, with a noble metal or GaAs as a coupling agent, in particular with gold, in particular of a layer thickness of 10 to 100 nm, is coated with a phobing auxiliary, preferably with decane thiol, then the surface topography is analysed, in particular by means of a combination of scanning tunnelling microscopy, atomic force microscopy, white light interferometry and, on the basis of the measured data, the spatial frequencies f and the structural amplitudes a(f) thereof, together with the integral of the function S

$$S(\log f) = a(f)\cdot f \quad (1),$$

calculated between the integration limits $\log(f_1/\mu m^{-1}) = -3$ and $\log(f_2/\mu m^{-1}) = 3$, are determined.

## Revendications

1. Surface structurée à propriétés ultraphobes, **caractérisée en ce qu'**elle présente une topographie superficielle dans laquelle la valeur de l'intégrale d'une fonction S

$$S(\log f) = a(f) \cdot f \qquad (1)$$

qui donne une relation entre les fréquences spatiales f des composants de Fourier individuels et leurs amplitudes a(f), entre les limites d'intégration $\log(f_1/\mu m^{-1}) = -3$ et $\log(f_2/\mu m^{-1}) = 3$, est d'au moins 0,5 et **en ce qu'**elle se compose d'un matériau hydrophobe ou, en particulier, oléophobe ou est revêtue d'un matériau hydrophobe ou, en particulier, oléophobe.

2. Surface selon la revendication 1, **caractérisée en ce que** l'intégrale est > 0,6.

3. Surface ultraphobe selon la revendication 1 ou la revendication 2, **caractérisée en ce qu'**elle présente un angle de contact d'au moins 150° et un angle de déroulement de < 10°.

4. Surface ultraphobe selon l'une quelconque des revendications 1 à 3, **caractérisée en ce qu'**elle présente un angle de contact d'au moins 155°.

5. Surface ultraphobe selon l'une quelconque des revendications 1 à 4, **caractérisée en ce qu'**elle se compose de métal ou de matière synthétique.

6. Surface ultraphobe selon la revendication 5, **caractérisée en ce que** le métal est sélectionné parmi la série béryllium, magnésium, scandium, titane, vanadium, chrome, manganèse, fer, cobalt, nickel, cuivre, zinc, aluminium, gallium, yttrium, zirconium, niobium, molybdène, technétium, ruthénium, rhénium, palladium, argent, cadmium, indium, étain, lanthane, cérium, praséodyme, néodyme, samarium, europium, gadolinium, terbium, dysprosium, holmium, erbium, thulium, ytterbium, lutétium, hafnium, tantale, tungstène, rhénium, osmium, iridium, platine, or, thallium, plomb, bismuth, en particulier, titane, aluminium, magnésium et nickel, ou un alliage des métaux cités.

7. Surface ultraphobe selon la revendication 5, **caractérisée en ce que** le métal est un alliage aluminium - magnésium, en particulier, $AlMg_3$.

8. Surface ultraphobe selon la revendication 5, **caractérisée en ce que** la matière synthétique est une matière synthétique duroplastique ou thermoplastique.

9. Surface ultraphobe selon la revendication 8, **caractérisée en ce que** la matière synthétique duroplastique est sélectionnée parmi la série : résine de phtalate de diallyle, résine époxyde, résine urée-formaldéhyde, résine mélamine-formaldéhyde, résine mélamine-phénol-formaldéhyde, résine phénol-formaldéhyde, polyimide, caoutchouc de silicone, et résine de polyester insaturé et **en ce que** la matière synthétique thermoplastique est sélectionnée parmi la série : polyoléfine thermoplastique (par exemple polypropylène ou polyéthylène), polycarbonate, carbonate de polyester, polyester (par exemple PBT ou PET), polystyrène, copolymère du styrène, résine SAN, copolymère de greffe de styrène contenant du caoutchouc (par exemple polymère ABS), polyamide, polyuréthanne, sulfure de polyphénylène, chlorure de polyvinyle ou mélanges possibles quelconques des polymères cités.

10. Surface ultraphobe selon l'une quelconque des revendications 1 à 9, **caractérisée en ce que** la surface présente un revêtement ayant un adjuvant de repoussement hydrophobe, en particulier, un composé tensioactif anionique, cationique, amphotère ou non ionique.

11. Matériau ou matériel de construction présentant une surface ultraphobe selon l'une quelconque des revendications 1 à 10.

12. Utilisation de la surface ultraphobe selon l'une quelconque des revendications 1 à 10, en vue de l'habillement, réduisant la friction, de carrosseries de véhicules, de coques d'avions ou de navires.

13. Utilisation de la surface ultraphobe selon l'une quelconque des revendications 1 à 10, en tant que revêtement ou recouvrement auto-nettoyant de bâtiments, de toitures, de fenêtres, de matériel de construction céramique, par

exemple, pour installations sanitaires, appareils ménagers.

**14.** Utilisation de la surface ultraphobe selon l'une quelconque des revendications 1 à 10 en tant que revêtement de protection contre la rouille d'articles métalliques.

**15.** Utilisation de la surface ultraphobe selon l'une quelconque des revendications 1 à 10 en tant que vitre transparente ou en tant que couche de finition de vitres transparentes, en particulier, de vitres en verre ou en matière synthétique, en particulier, pour cellules solaires, véhicules ou serres chaudes.

**16.** Procédé en vue de la fabrication d'une surface ayant des propriétés ultraphobes selon l'une quelconque des revendications 1 à 10, à base d'un alliage $AlMg_3$, **caractérisé en ce que** la surface est nettoyée, mordancée, oxydée par voie anodique, passivée dans l'eau bouillante, le cas échéant, revêtue à l'aide d'un métal noble en tant qu'agent promoteur de l'adhésion, en particulier, à l'aide d'or d'une épaisseur de couche de 10 à 100 nm, en particulier, par pulvérisation et est revêtue à l'aide d'un matériau hydrophobe, en particulier, à l'aide d'un composé tensioactif anionique, cationique, amphotère ou non ionique, en tant qu'adjuvant de repoussement.

**17.** Procédé en vue de la fabrication d'une surface ayant des propriétés ultraphobes par moulage, **caractérisé en ce qu'**un moule, qui présente le négatif d'une topographie superficielle appropriée à une surface ultraphobe, est moulé à l'aide d'un mélange fait d'une matière synthétique et d'un additif hydrophobe ou, en particulier, oléophobe, qui se dépose lors du durcissement en tant que film mince entre la surface du moule et la pièce moulée de matière synthétique.

**18.** Procédé en vue de la fabrication d'une surface ayant des propriétés ultraphobes par moulage, **caractérisé en ce que** la surface d'un moule positif, qui présente une structure superficielle appropriée à une surface ultraphobe, est moulée à l'aide d'une matière synthétique, en particulier, à l'aide d'un polymère duroplastique ou thermoplastique et **en ce que** la surface de la pièce moulée ainsi obtenue est pourvue de l'empreinte négative de la surface du moule positif, le cas échéant, avec une couche d'agent promoteur de l'adhésion et ensuite avec un revêtement hydrophobe ou, en particulier, oléophobe.

**19.** Procédé selon la revendication 18, **caractérisé en ce que** l'on utilise, en tant que polymère, un polymère hydrophobe, de préférence, le poly(méthacrylate de méthyle-co-méthacrylate de perfluoro-octadécyle) et **en ce que** l'on renonce, le cas échéant, au revêtement supplémentaire à l'aide du matériau hydrophobe ou oléophobe.

**20.** Procédé selon la revendication 17 ou 18, **caractérisé en ce que** l'on utilise, en tant que moule, le négatif ou le positif de la structure superficielle d'une surface mordancée, anodisée et traitée à l'aide d'eau chaude d'une température de 50 à 100°C et contenant, pour l'essentiel, de l'aluminium ou un alliage d'aluminium.

**21.** Procédé selon la revendication 17 ou la revendication 18, **caractérisé en ce que** l'on utilise, en tant que moule, le négatif ou le positif de la structure superficielle d'une surface micro structurée, anodisée, calcinée et contenant, pour l'essentiel, de l'aluminium ou un alliage d'aluminium.

**22.** Procédé selon l'une quelconque des revendications 17 à 21, **caractérisé en ce que** l'on utilise pour le moulage, en tant que matière synthétique, une matière synthétique duroplastique ou une matière synthétique thermoplastique.

**23.** Procédé selon la revendication 22, **caractérisé en ce que** la matière synthétique duroplastique est sélectionnée parmi la série : résine de phtalate de diallyle, résine époxyde, résine urée-formaldéhyde, résine mélamine-formaldéhyde, résine mélamine-phénol-formaldéhyde, résine phénol-formaldéhyde, polyimide, caoutchouc de silicone et résine de polyester insaturé.

**24.** Procédé selon la revendication 22, **caractérisé en ce que** la matière synthétique thermoplastique est sélectionnée parmi la série : polyoléfine thermoplastique, par exemple polypropylène ou polyéthylène, polycarbonate, carbonate de polyester, polyester (par exemple PBT ou PET), polystyrène, copolymère de styrène, résine SAN, copolymère de greffe de styrène contenant du caoutchouc, par exemple polymère ABS, polyamide, polyuréthanne, sulfure de polyphénylène, chlorure de polyvinyle ou mélanges possibles quelconques des polymères cités.

**25.** Procédé selon l'une quelconque des revendications 17 à 24, **caractérisé en ce que** la surface de la pièce moulée avec l'empreinte présente un revêtement à l'aide d'un adjuvant de repoussement hydrophobe, en particulier, d'un

composé tensioactif anionique, cationique, amphotère ou non ionique, ou **en ce que** l'on utilise un adjuvant de repoussement de ce genre, en tant qu'additif, pour en former un polymère compatible, qui rend la surface hydrophobe.

**26.** Procédé en vue du contrôle de surfaces pour ce qui est des propriétés ultraphobes, **caractérisé en ce que** la surface est revêtue à l'aide d'un métal noble ou de GaAs en tant qu'agent promoteur de l'adhésion, en particulier, d'or, en particulier, d'une épaisseur de couche de 10 à 100 nm, en particulier, est revêtue par vaporisation à l'aide d'un adjuvant de repoussement, est revêtue, de préférence, à l'aide de décanethiol, **en ce qu'**ensuite la topographie superficielle est analysée, en particulier, à l'aide d'une combinaison de microscopie tunnel à balayage, de microscopie de force à balayage, d'interférométrie en lumière blanche et en que l'on forme, à partir des données mesurées, les fréquences spatiales f ainsi que leurs amplitudes de structure a(f), tout comme l'intégrale de la fonction S

$$S(\log f) = a(f) \cdot f \qquad (1)$$

calculée entre les limites d'intégration $\log(f_1/\mu m^{-1}) = -3$ et $\log(f_2/\mu m^{-1}) = 3$.

Fig. 1

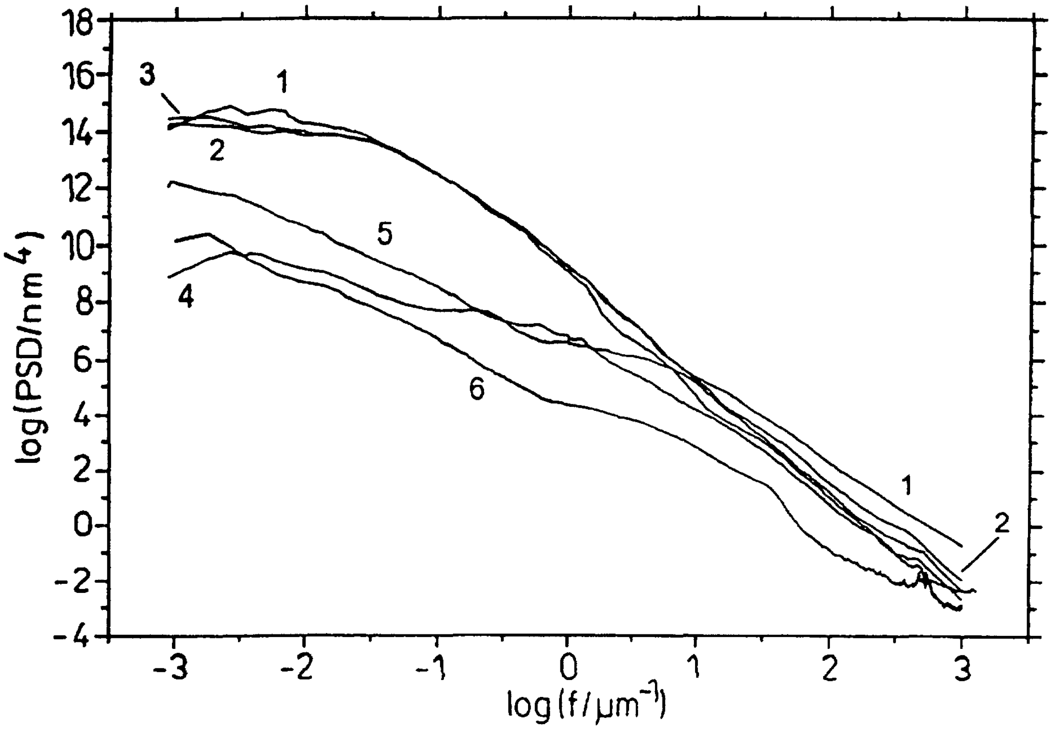
log(PSD/nm⁴)
18
16
14
12
10
8
6
4
2
0
-2
-4
-3
-2
-1
0
1
2
3
log(f/μm⁻¹)
1
2
3
4
5
6
1
2

Fig. 2

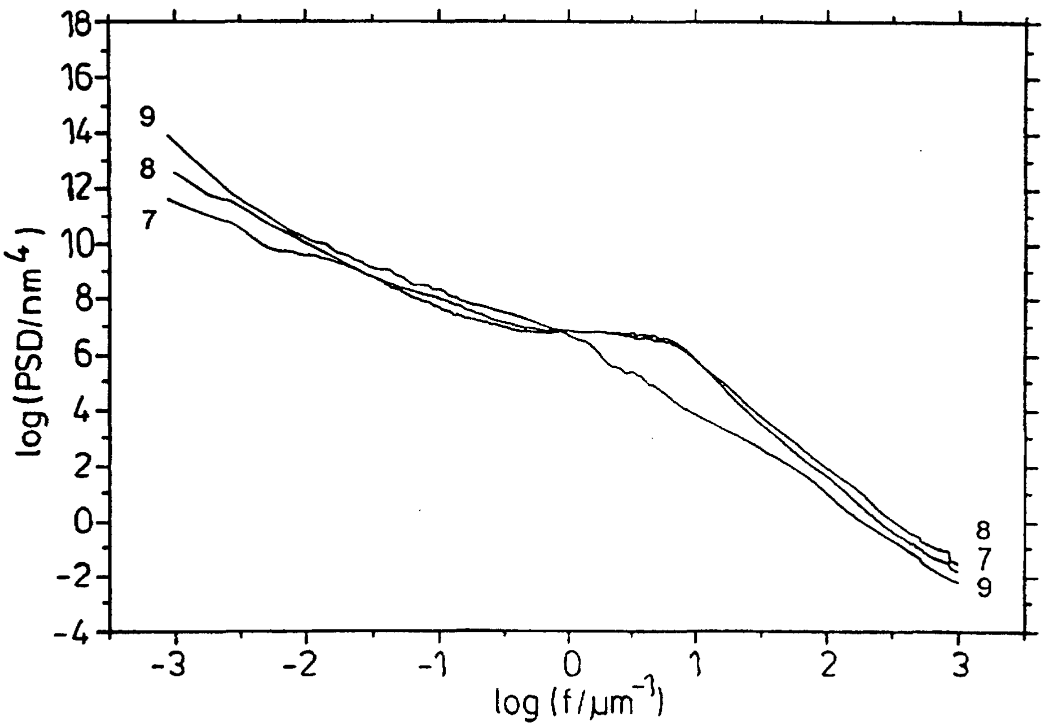
log(PSD/nm⁴)
18
16
14
12
10
8
6
4
2
0
-2
-4
-3
-2
-1
0
1
2
3
log (f/μm⁻¹)
9
8
7
8
7
9

Fig. 3

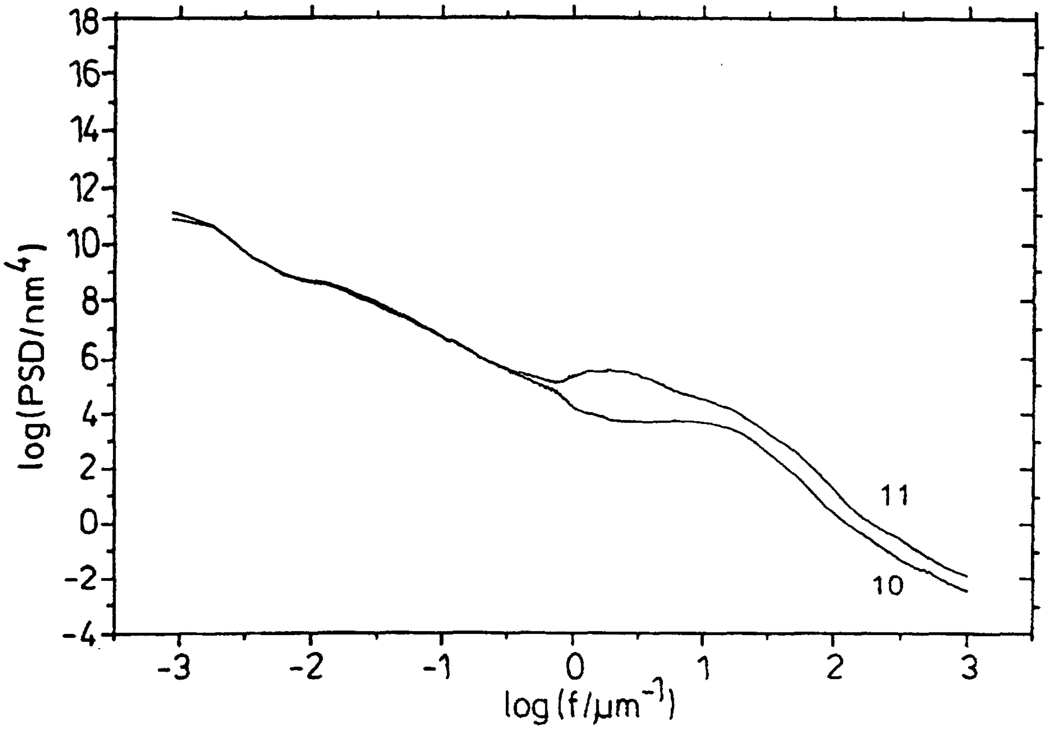
18
16
14
12
10
8
6
4
2
0
-2
-4
log(PSD/nm⁴)
-3
-2
-1
0
1
2
3
log(f/µm⁻¹)
11
10

Fig. 4

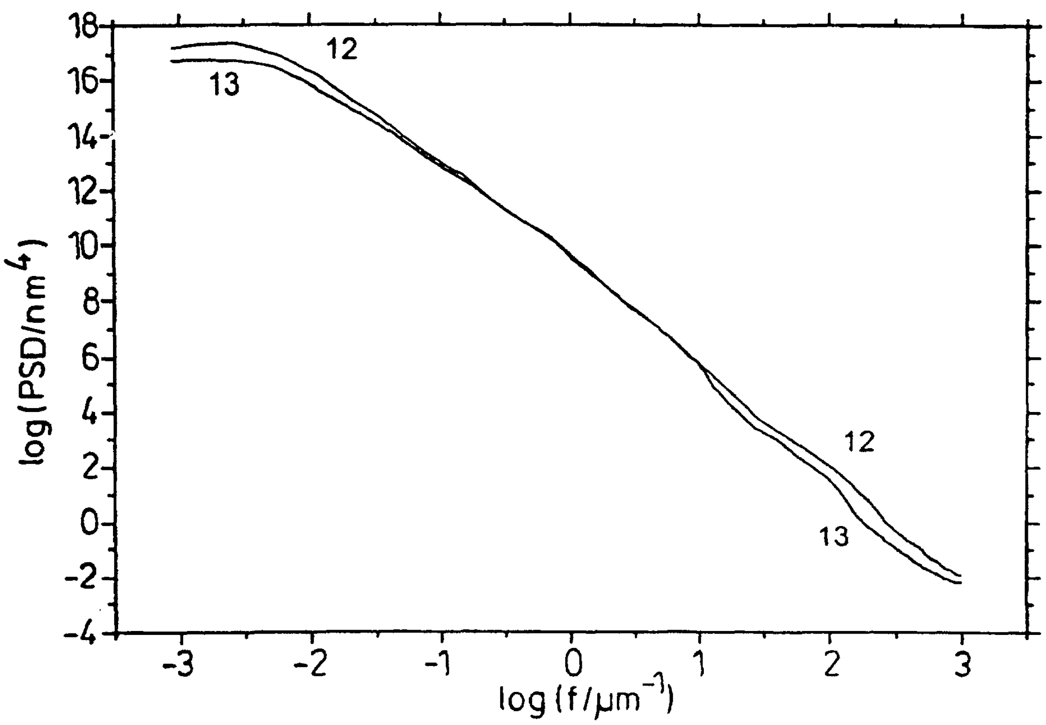
18
16
14
12
10
8
6
4
2
0
-2
-4
log(PSD/nm⁴)
-3
-2
-1
0
1
2
3
log(f/µm⁻¹)
12
13
12
13

Fig. 5

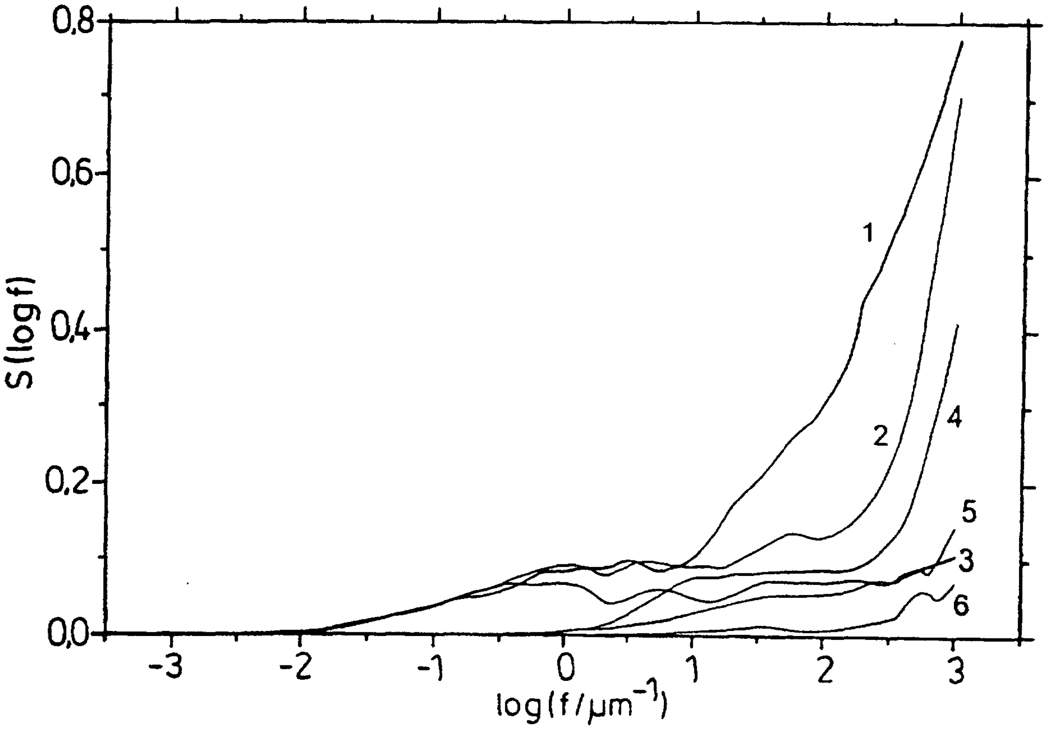
0,8
0,6
0,4
0,2
0,0
S(logf)
-3
-2
-1
0
1
2
3
log(f/μm⁻¹)
1
2
3
4
5
6

Fig. 6

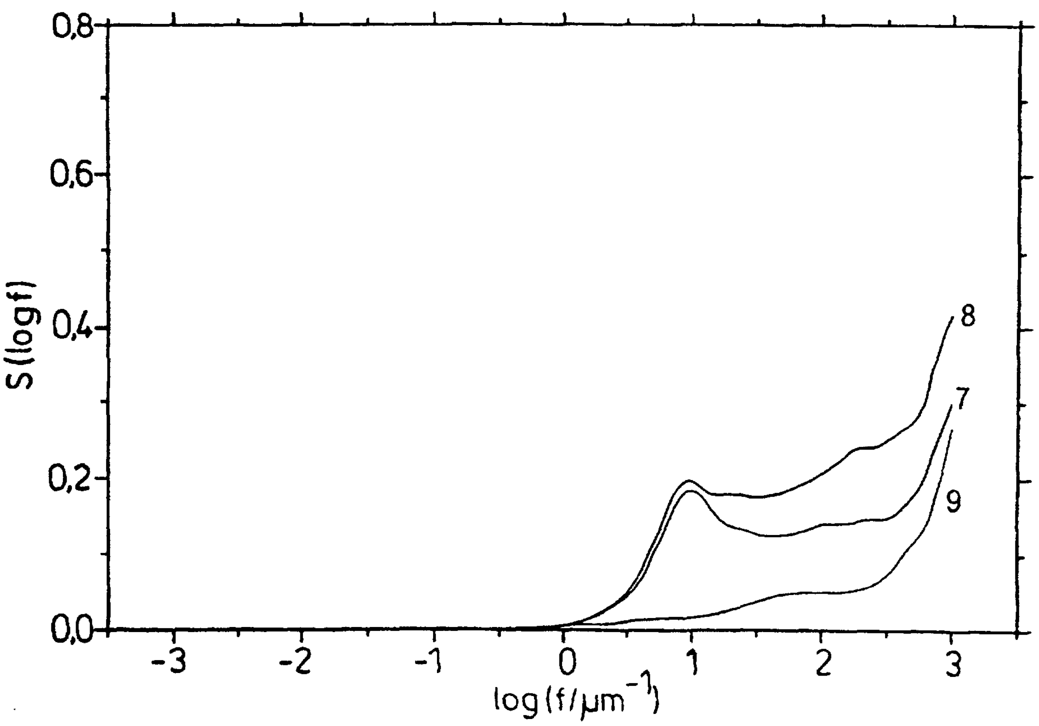
0,8
0,6
0,4
0,2
0,0
S(logf)
-3
-2
-1
0
1
2
3
log(f/μm⁻¹)
7
8
9

Fig. 7

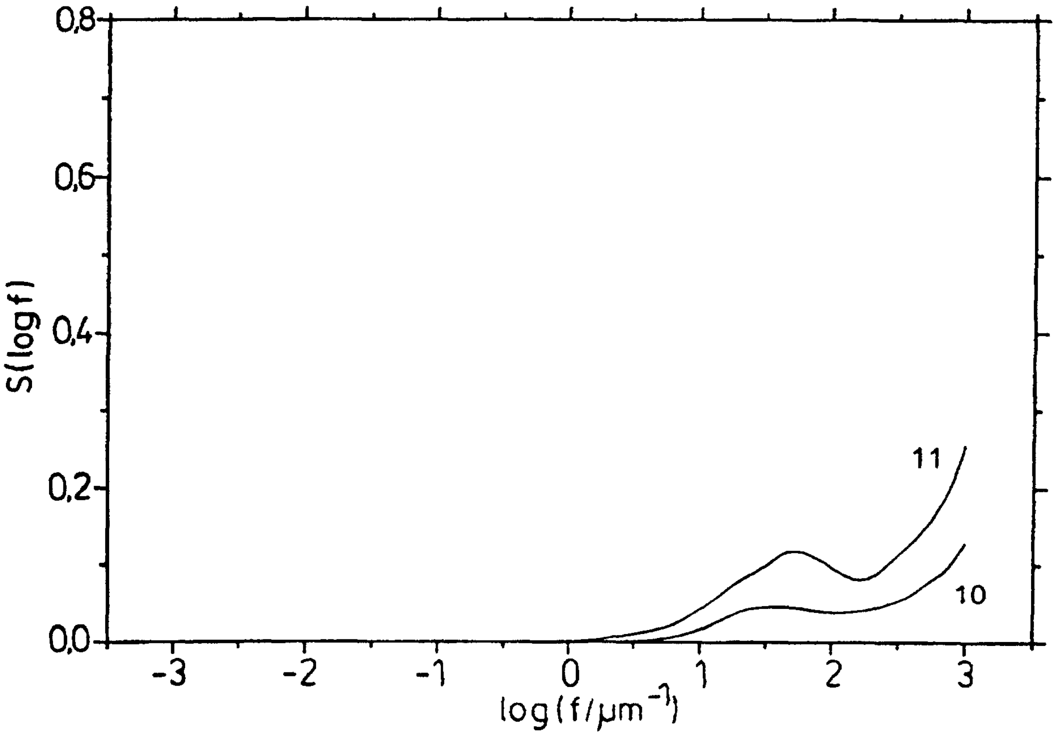
0,8
0,6
0,4
0,2
0,0
S(log f)
11
10
-3
-2
-1
0
1
2
3
log(f/µm⁻¹)

Fig. 8

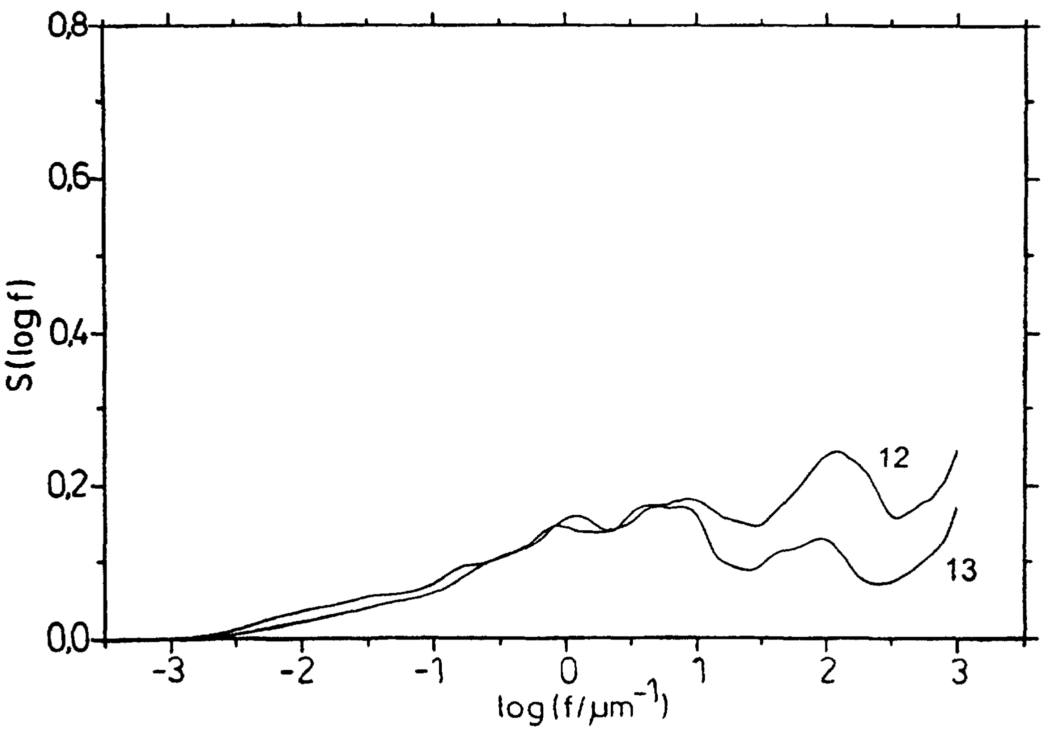
0,8
0,6
0,4
0,2
0,0
S(log f)
12
13
-3
-2
-1
0
1
2
3
log(f/µm⁻¹)

Fig. 9

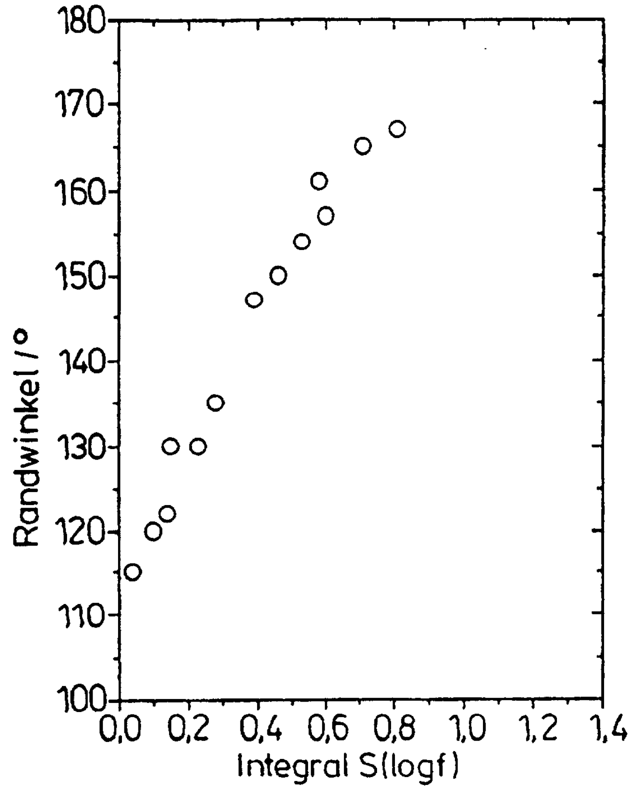
180
170
160
150
140
130
120
110
100
Randwinkel /°
0,0 0,2 0,4 0,6 0,8 1,0 1,2 1,4
Integral S(logf)

Fig. 10

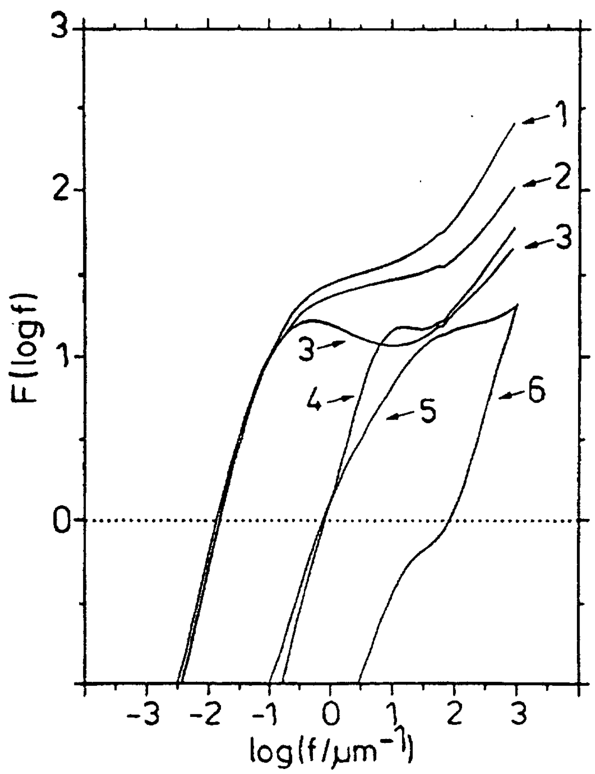
3
2
1
0
F(logf)
1
2
3
3
4
5
6
-3 -2 -1 0 1 2 3
log(f/μm⁻¹)

Fig. 11

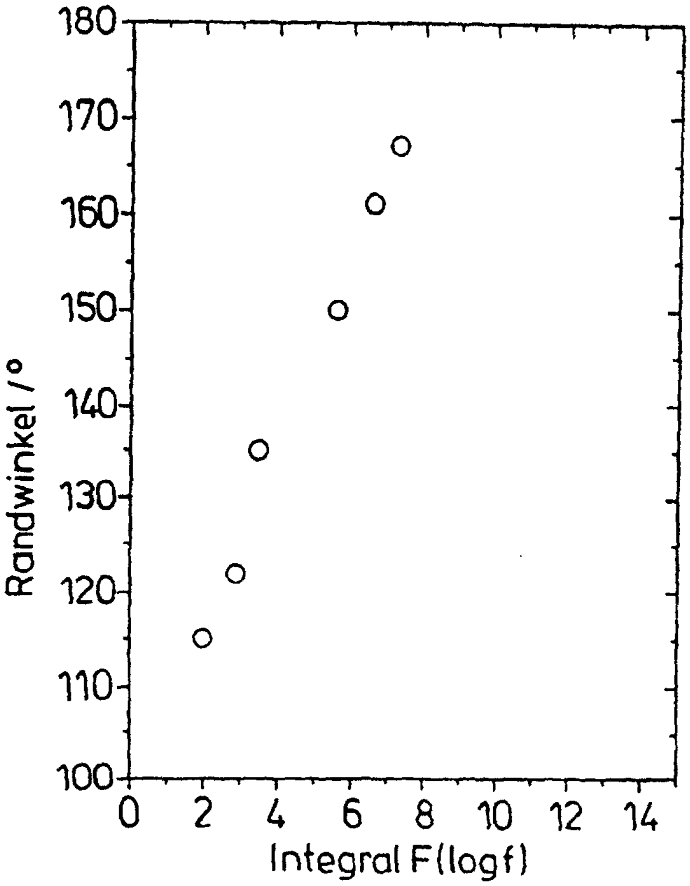
180
170
160
150
140
130
120
110
100
Randwinkel /°
0
2
4
6
8
10
12
14
Integral F(log f)